# EUROPEAN PATENT APPLICATION

(11) **EP 4 438 649 A1**
(43) Date of publication of application: **02.10.2024**
(21) Application number: 22898399.5
(22) Date of filing: 09.11.2022
(51) Int. Cl.: C08G 59/40, B32B 7/12, B32B 27/38, C08G 59/20, C09J 163/00

(54) **EPOXY RESIN COMPOSITION, CURED PRODUCT THEREOF, AND LAMINATE**

(30) Priority: 24.11.2021 JP 2021190532
(71) Applicant: DIC Corporation, Tokyo 174-8520 (JP); Kyushu University, National University Corporation, Nishi-ku Fukuoka-shi Fukuoka 819-0395 (JP)
(72) Inventor: OTSU Masato, Sakura-shi, Chiba 285-8668 (JP); ARITA Kazuo, Sakura-shi, Chiba 285-8668 (JP); SATO Eriko, Osaka-shi, Osaka 558-8585 (JP)
(74) Representative: TBK
(86) International application number: PCT/JP2022/041694
(87) International publication number: WO 2023/095615

(57) **Abstract**

The present invention can provide an epoxy resin composition that can have flexibility, toughness, adhesiveness, and high disassemblability by heating, and can provide a cured product and a laminate thereof. An epoxy resin composition according to the present invention contains an epoxy resin (A) with an epoxy equivalent in the range of 500 to 10,000 g/eq, an epoxy resin (B) with an epoxy equivalent in the range of 100 to 300 g/eq, and a compound (C) with an anthracene dimer skeleton. The epoxy resin (A) is represented by the following general formula (1), and the compound (C) has two or more groups containing an epoxy group or two or more groups containing a curable group.

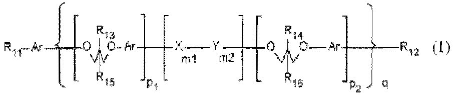

## Description

### Technical Field

The present invention relates to an epoxy resin composition, and a cured product and a laminate thereof.

The present application claims the priority of Japanese Patent Application No. 2021-190532 filed on November 24, 2021 in Japan, which is incorporated herein by reference in its entirety.

### Background Art

From the perspective of reducing carbon dioxide emissions and improving fuel efficiency, techniques for reducing the weight of automobiles, airplanes, and the like have been desired. For example, weight reduction has been promoted by reducing the number of spot welds, by using CFRP and a metal in combination, or the like. To realize this, it is essential to improve the performance of an adhesive agent for a structural material. In particular, in thermal bonding of aluminum and CFRP, which have a large thermal expansion difference, the occurrence of warpage or waving due to interfacial stress caused by expansion and contraction is regarded as a problem, and an adhesive agent for relieving stress is required.

On the other hand, the achievement of high adhesive performance is also responsible for a product that is difficult to recycle, and limits disassemblability and reusability after use. Against the background of increased environmental awareness in recent years, it is also important to develop an adhesive agent that can be easily peeled off after a period of use while maintaining high adhesive performance.

Under such a background, easy-to-disassemble adhesive agents have been actively developed. Although thermal melting of a thermoplastic resin is generally widely used, a technique has also been proposed in recent years in which a thermosetting resin is mixed with a thermally expandable material or a thermally decomposable compound in advance, and thermal energy is mainly applied after use to reduce adhesive strength for peeling (see, for example, Patent Literature 1 and Patent Literature 2).

However, in the technique of Patent Literature 1, a known epoxy resin composition is basically used as an adhesive agent, and a thermally expandable material may foam insufficiently in a cured product (adhesive layer). This may result in insufficient detachability or poor removal due to the rigidity and brittleness of the adhesive layer. In the technique of Patent Literature 2, a thermally decomposable compound contained in advance causes complicatedness in use by requiring strict control of the heating temperature in a curing reaction. In particular, when a thermally conductive metal substrate is used, the adhesive agent may be excessively heated at an unexpected portion and cause a problem.

### Citation List

### Patent Literature

PTL 1: Japanese Unexamined Patent Application Publication No. 2003-286464
PTL 2: Japanese Unexamined Patent Application Publication No. 2013-256557

### Summary of Invention

### Technical Problem

In view of the above circumstances, an object of the present invention is to provide an epoxy resin composition that has high flexibility and toughness resistant to deformation, has high adhesiveness to a substrate, can easily realize high disassemblability (detachability) after use, and can be suitably used as a structural adhesive or the like.

### Solution to Problem

As a result of extensive studies, the present inventors have completed the present invention by finding that the object can be achieved by using an epoxy resin with a specific structure and blending a compound with an anthracene dimer skeleton in a resin composition.

Accordingly, in the present invention, the contents of the present disclosure include the following aspects [1] to [15] .
[1] An epoxy resin composition containing:
   an epoxy resin (A) with an epoxy equivalent in the range of 500 to 10,000 g/eq;
   an epoxy resin (B) with an epoxy equivalent in the range of 100 to 300 g/eq; and
   a compound (C) with an anthracene dimer skeleton,
   wherein the epoxy resin (A) is represented by the following general formula (1), and
   the compound (C) has two or more groups containing an epoxy group or two or more groups containing a curable group. 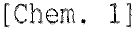 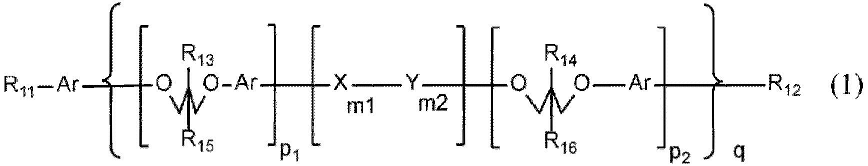 [In the formula (1), Ar each independently denotes a structure having an unsubstituted aromatic ring or having an aromatic ring with a substituent, and
   X denotes a structural unit represented by the following general formula (2), and Y denotes a structural unit represented by the following general formula (3): 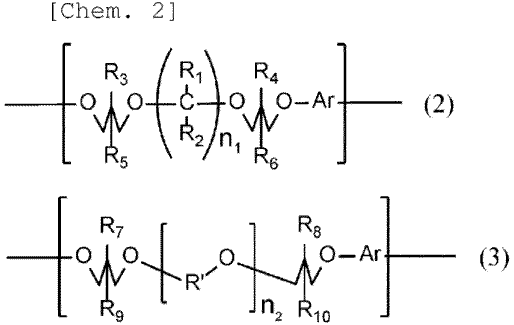 [In the formulae (2) and (3), Ar is the same as defined above,
   R₁ and R₂ each independently denote a hydrogen atom, a methyl group, or an ethyl group,
   R' denotes a divalent hydrocarbon group with 2 to 12 carbon atoms,
   R₃, R₄, R₇, and R₈ each independently denote a hydroxy group, a glycidyl ether group, or a 2-methyl glycidyl ether group,
   R₅, R₆, R₉, and R₁₀ each independently denote a hydrogen atom or a methyl group,
   n₁ denotes an integer in the range of 4 to 16, and
   n₂ denotes an average value of repeating unit in the range of 2 to 30.]
   R₁₁ and R₁₂ each independently denote a glycidyl ether group or a 2-methyl glycidyl ether group,
   R₁₃ and R₁₄ each independently denote a hydroxy group, a glycidyl ether group, or a 2-methyl glycidyl ether group,
   R₁₅ and R₁₆ denote a hydrogen atom or a methyl group,
   m₁, m₂, p₁, p₂, and q denote an average value of repetition,
   m₁ and m₂ each independently range from 0 to 25, and m₁ + m₂ ≥ 1,
   p₁ and p₂ each independently range from 0 to 5, and
   q ranges from 0.5 to 5, provided that a bond between X represented by the general formula (2) and Y represented by the general formula (3) may be random or block, and a total number of a structural unit X per molecule and a total number of a structural unit Y per molecule are m₁ and m₂, respectively.]
[2] The epoxy resin composition according to [1], wherein Ar in the general formulae (1) to (3) is each independently represented by any one of the following structural formulae (4). 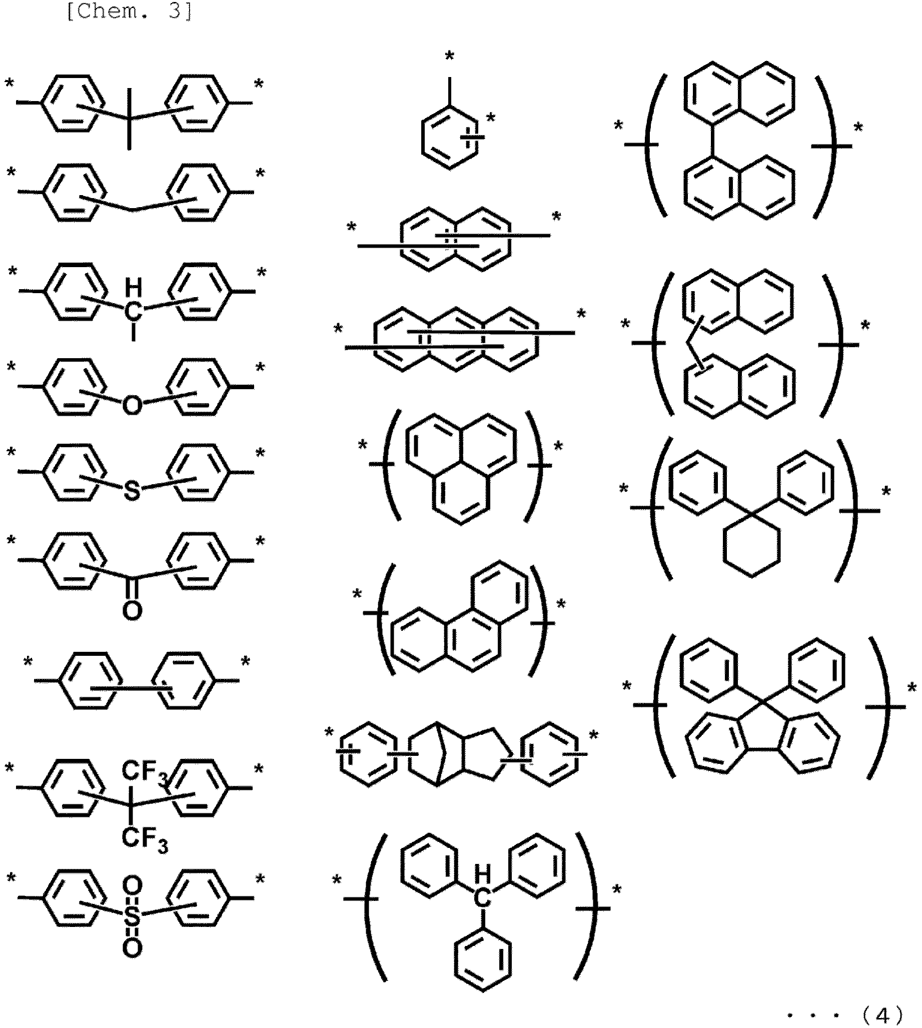 [An aromatic ring in the formulae (4) may be substituted or unsubstituted, and * denotes a bonding point.]
[3] The epoxy resin composition according to [1] or [2], wherein n₁ in the general formula (2) ranges from 6 to 12, R₃ and R₄ denote a hydroxy group, and R₅ and R₆ denote a hydrogen atom.
[4] The epoxy resin composition according to any one of [1] to [3], wherein in the general formula (3) R' denotes a divalent hydrocarbon group with 2 to 6 carbon atoms, R₇ and R₈ denote a hydroxy group, and R₉ and R₁₀ denote a hydroxy group.
[5] The epoxy resin composition according to any one of [1] to [4], wherein the compound (C) with the anthracene dimer skeleton is a compound (C-i1) represented by the following general formula (I-1). 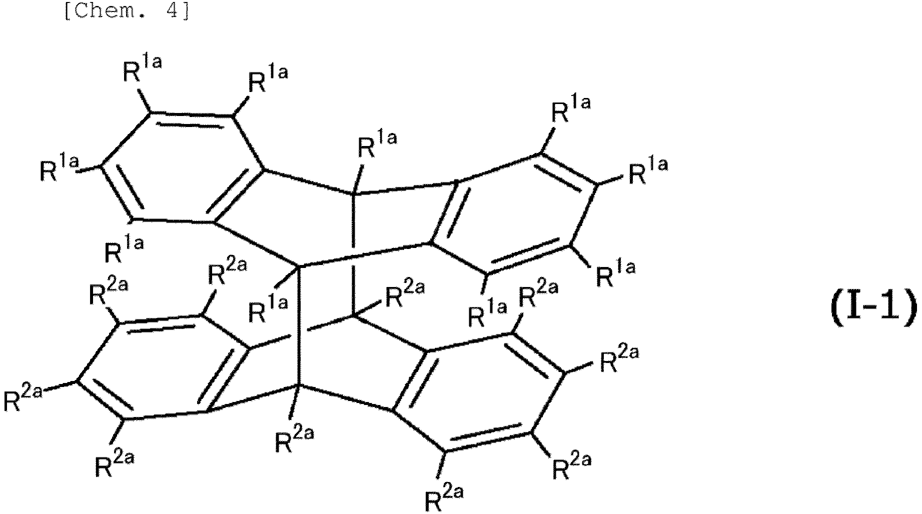 [In the general formula (I-1),
   a plurality of R^{1a}s each independently denote a hydrogen atom or a monovalent substituent, provided that at least one R^{1a} denotes a group containing an epoxy group, and
   a plurality of R^{2a}s each independently denote a hydrogen atom or a monovalent substituent, provided that at least one R^{2a} denotes a group containing an epoxy group.]
[6] The epoxy resin composition according to any one of [1] to [4], wherein the compound (C) with the anthracene dimer skeleton is a compound (C-i2) represented by the following general formula (I-2). 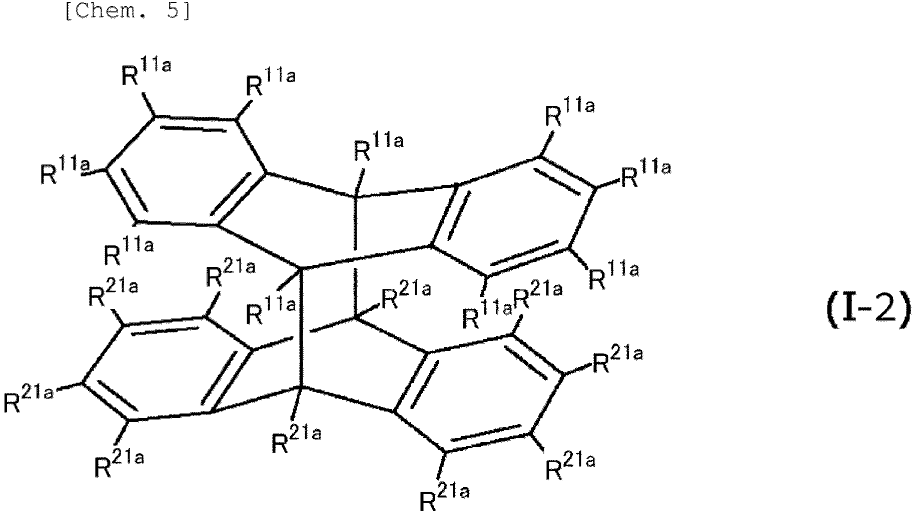 [In the general formula (I-2),
   a plurality of R^{11a}s each independently denote a hydrogen atom or a monovalent substituent, provided that at least one R^{11a} denotes a group containing a curable group, and
   a plurality of R^{21a}s each independently denote a hydrogen atom or a monovalent substituent, provided that at least one R^{21a} denotes a group containing a curable group.]
[7] The epoxy resin composition according to [6], wherein in the compound (C-i2) represented by the general formula (I-2) at least one R^{11a} and at least one R^{21a} are selected from the group consisting of a group containing an amino group, a group containing a hydroxy group, and a group containing a carboxy group.
[8] The epoxy resin composition according to [6] or [7], wherein in the compound (C-i2) represented by the general formula (1-2) at least one R^{11a} and at least one R^{21a} denote a group containing a carboxy group.
[9] The epoxy resin composition according to any one of [1] to [8], further containing a curing agent (D).
[10] The epoxy resin composition according to any one of [1] to [9], which is an adhesive agent.
[11] A cured product of the epoxy resin composition according to any one of [1] to [10].
[12] The cured product of the epoxy resin composition according to [11], wherein
   the cured product of the epoxy resin composition has a sea-island structure composed of a sea portion and an island portion, and
   the sea portion has an average particle size in the range of 10 nm to 100 µm.
[13] A laminate produced by stacking a substrate and the cured product according to [11] or [12].
[14] A laminate produced by stacking a first substrate, a layer composed of the cured product according to [11] or [12], and a second substrate in this order.
[15] The laminate according to [14], wherein the first substrate is a substrate composed of a metal or a metal oxide, and the second substrate is a substrate composed of a plastic.

### Advantageous Effects of Invention

According to the present invention, an epoxy resin with a long-chain alkylene chain or a polyether chain in a molecule thereof is used to provide a cured product with stress relaxation ability. Curing of two specific epoxy resins forms a flexible matrix phase and a rigid island phase by phase separation and can provide both flexibility and toughness. The cured product can also have both flexibility on the premise of elastic deformation and high adhesiveness to a substrate. Furthermore, the use of an anthracene dimer skeleton with a dissociation function can provide high disassemblability by heating. This results in high disassemblability (detachability). Thus, an epoxy resin composition according to the present invention can be suitably used as a structural adhesive or the like. Description of Embodiments

The present invention is described in more detail below. The present invention is not limited to the embodiments described below.
"to" means a value equal to or higher than a value before the description "to" and a value equal to or lower than a value after the description "to".

A group (atomic group) in the present description described without specifying whether the group is substituted or unsubstituted includes both a group with no substituent and a group with a substituent. For example, the term "alkyl group" includes not only an alkyl group with no substituent (unsubstituted alkyl group) but also an alkyl group with a substituent (substituted alkyl group).

Unless otherwise specified, the term "organic group", as used herein, refers to an atomic group produced by removing one or more hydrogen atoms from an organic compound. For example, a "monovalent organic group" refers to an atomic group produced by removing one hydrogen atom from an organic compound.

### (Epoxy Resin Composition)

An epoxy resin composition according to the present embodiment contains an epoxy resin (A) with an epoxy equivalent in the range of 500 to 10,000 g/eq, an epoxy resin (B) with an epoxy equivalent in the range of 100 to 300 g/eq, and a compound (C) with an anthracene dimer skeleton. The epoxy resin (A), the epoxy resin (B), and the compound (C) are described in detail later.

In the epoxy resin composition according to the present embodiment, the compound (C) has an anthracene dimer skeleton and has a group containing an epoxy group or a group containing a curable group, and the anthracene dimer skeleton is introduced into a cross-linked structure of a cured body of the epoxy resin composition according to the present embodiment.

According to previous studies and findings of the inventor, an unsubstituted anthracene dimer skeleton is decomposed (thermally dissociated) into a monomer structure by heating at a thermal dissociation temperature in the range of approximately 100°C to 220°C. For example, the epoxy resin composition according to the present embodiment can be attached to the surface of an adherend and subjected to first heat treatment at a temperature lower than the thermal dissociation temperature of an anthracene dimer skeleton to be used, thereby allowing the epoxy resin to be reacted with a curing agent to produce a cured body bonded to the adherend. The cured body is then subjected to second heat treatment to heat the cured body at a temperature equal to or higher than the thermal dissociation temperature, thereby thermally dissociating the anthracene dimer skeleton in the cured body. The second heat treatment causes "decrosslinking" and realizes disassemblability. On the other hand, the cured body produced by the first heat treatment is usually stable at a temperature lower than 80°C. Thus, both high adhesive strength and high disassemblability can be achieved.

Furthermore, only heat is required to form (dissociate) the anthracene dimer skeleton into a monomer structure. This is a desirable property, for example, when an opaque material with a complex shape is bonded and is then disassembled.

The epoxy resin composition according to the present embodiment is more specifically described below.

The epoxy resin composition according to the present embodiment contains an epoxy resin (A) with an epoxy equivalent in the range of 500 to 10,000 g/eq, an epoxy resin (B) with an epoxy equivalent in the range of 100 to 300 g/eq, and a compound (C) with an anthracene dimer skeleton. The compound (C) has two or more groups containing an epoxy group or two or more groups containing a curable group. The epoxy resin (A) is represented by the following general formula (1): 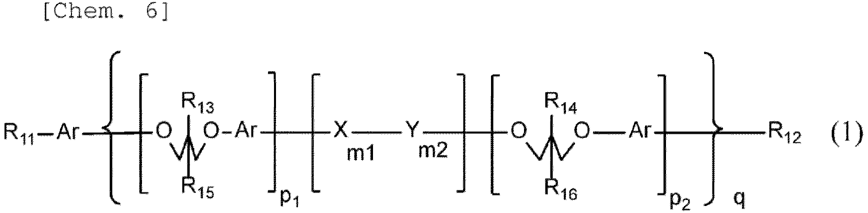 [In the formula (1), Ar each independently denotes a structure having an unsubstituted aromatic ring or having an aromatic ring with a substituent, and
X denotes a structural unit represented by the following general formula (2), and Y denotes a structural unit represented by the following general formula (3):

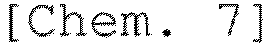

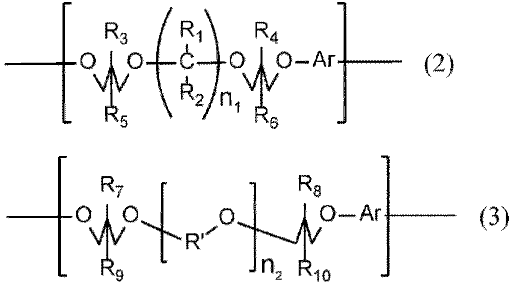

[In the formulae (2) and (3), Ar is the same as defined above,
R₁ and R₂ each independently denote a hydrogen atom, a methyl group, or an ethyl group,
R' denotes a divalent hydrocarbon group with 2 to 12 carbon atoms,
R₃, R₄, R₇, and R₈ each independently denote a hydroxy group, a glycidyl ether group, or a 2-methyl glycidyl ether group,
R₅, R₆, R₉, and R₁₀ each independently denote a hydrogen atom or a methyl group,
n₁ denotes an integer in the range of 4 to 16, and
n₂ denotes an average value of repeating unit in the range of 2 to 30.]
R₁₁ and R₁₂ each independently denote a glycidyl ether group or a 2-methyl glycidyl ether group,
R₁₃ and R₁₄ each independently denote a hydroxy group, a glycidyl ether group, or a 2-methyl glycidyl ether group,
R₁₅ and R₁₆ denote a hydrogen atom or a methyl group,
m₁, m₂, p₁, p₂, and q denote an average value of repetition,
m₁ and m₂ each independently range from 0 to 25, and m₁ + m₂ ≥ 1,
p₁ and p₂ each independently range from 0 to 5, and
q ranges from 0.5 to 5, provided that a bond between X represented by the general formula (2) and Y represented by the general formula (3) may be random or block, and a total number of a structural unit X per molecule and a total number of a structural unit Y per molecule are m₁ and m₂, respectively.]

### [Epoxy Resin (A)]

The epoxy resin (A) according to the present embodiment contains a structural unit X represented by the general formula (2) and/or a structural unit Y represented by the general formula (3) in the structure thereof, and the presence of an alkylene chain or a polyether chain in each structural unit enables a cured product to exhibit high flexibility. In particular, the flexibility due to the alkylene chain enables the epoxy resin (A) to follow the thermal expansion of a substrate when the epoxy resin (A) is used as an adhesive agent, and the polyether chain has an effect of lowering the viscosity of the epoxy resin (A) itself and can therefore contribute to an improvement in applicability and processability as an epoxy resin composition.

The epoxy resin (A) may have each of the structural units X and Y alone or may have both of the structural unit X and the structural unit Y in a molecule thereof. At this time, X and Y may be a block bond or a random bond, and the total number of the structural unit X and the total number of the structural unit Y in one molecular are m₁ and m₂, respectively.

Ar in the general formula (1) representing the epoxy resin (A), Ar in the general formula (2) representing the structural unit X, and Ar in the general formula (3) representing the structural unit Y each have a structure having an unsubstituted aromatic ring or having an aromatic ring with a substituent. The aromatic ring is, for example, but not limited to, a benzene ring, a naphthalene ring, an anthracene ring, a phenanthrene ring, or a fluorene ring.

Among these, Ar is preferably any of the structures represented by the following structural formula (4): 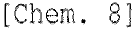 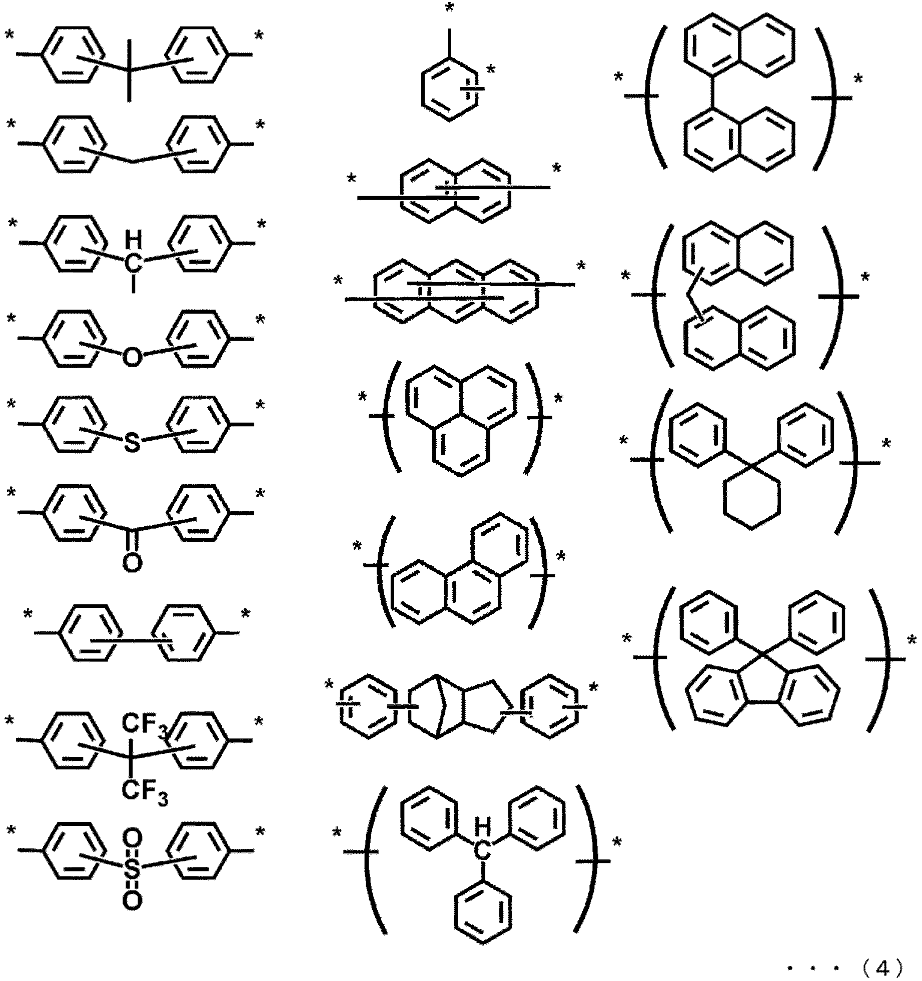 [An aromatic ring in the formulae (4) may be substituted or unsubstituted, and * denotes a bonding point.]

Ar may also be a structure represented by the following formula: 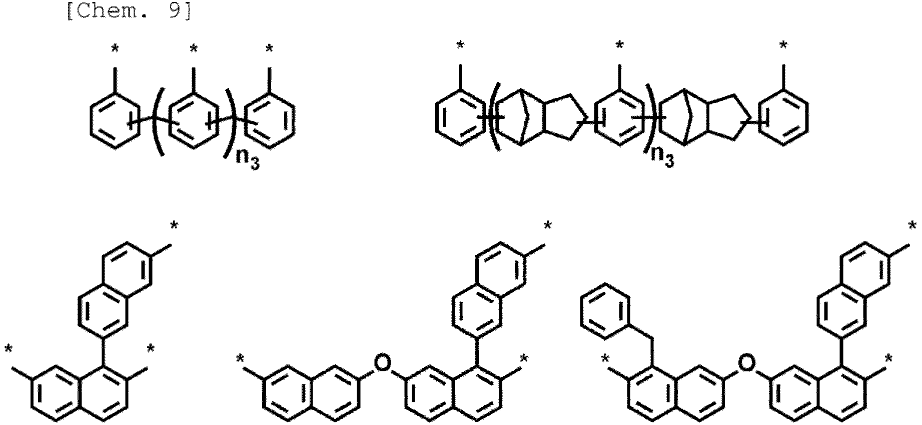 (In the formula, the aromatic ring may be substituted or unsubstituted, n₃ ranges from 1 to 4, and * denotes a bonding point.)

The aromatic ring of Ar may be substituted or unsubstituted. When Ar has a substituent, the substituent may preferably be an alkyl group, a halogen atom, a glycidyl ether group, a 2-methyl glycidyl ether group, or the like. It is preferably unsubstituted, or an alkyl group, a glycidyl ether group, or a 2-methyl glycidyl ether group. The substituent per aromatic ring is preferably two or less, more preferably one or less, particularly preferably unsubstituted.

The structure of Ar is particularly preferably as described below. * denotes a bonding point.

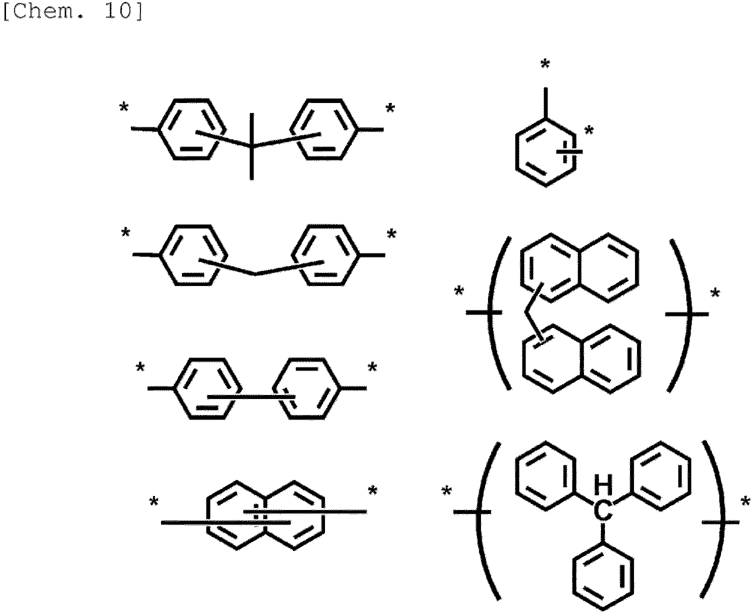

A particularly preferred structure of Ar with a substituent may be the following structure. * denotes a bonding point.

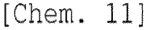

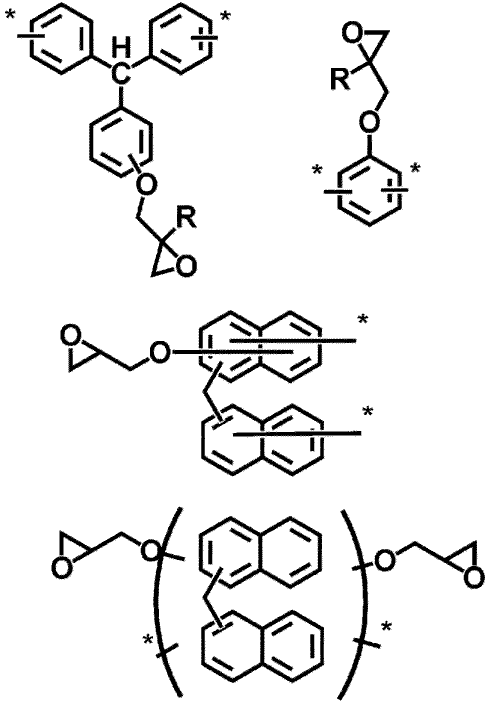

In the structural unit X represented by the general formula (2), the repeating unit n₁ is an integer in the range of 4 to 16. n₁ of 4 or more results in improved adhesive strength and a cured product having elastic deformation as a deformation mode. n₁ of 16 or less results in a smaller decrease in cross-linking density. It preferably ranges from 4 to 15, more preferably 6 to 12.

In the structural unit X represented by the general formula (2), R₁ and R₂ each independently denote a hydrogen atom, a methyl group, or an ethyl group, R₃ and R₄ each independently denote a hydroxy group, a glycidyl ether group, or a 2-methyl glycidyl ether group, and R₅ and R₆ each independently denote a hydrogen atom or a methyl group.

Among these, R₃ and R₄ preferably denote a hydroxy group, and R₅ and R₆ preferably denote a hydrogen atom.

In the structural unit Y represented by the general formula (3), n₂ denotes an average value of repeating unit in the range of 2 to 30. This range is preferred in terms of a good balance between the viscosity of the epoxy resin (A) and the cross-linking density of the resulting cured product. It preferably ranges from 2 to 25, more preferably 4 to 20.

In the structural unit Y represented by the general formula (3), R' denotes a divalent hydrocarbon group with 2 to 12 carbon atoms. In this range, the adhesive strength is improved, and the deformation mode of the cured product is elastic deformation. R' preferably denotes a divalent hydrocarbon group with 2 to 6 carbon atoms.

The divalent hydrocarbon group may be, but is not limited to, a linear or branched alkylene group, alkenylene group, alkynylene group, cycloalkylene group, arylene group, aralkylene group (divalent group with an alkylene group and an arylene group), or the like.

The alkylene group may be a methylene group, an ethylene group, a propylene group, a butylene group, a pentylene group, a hexylene group, a trimethylene group, a tetramethylene group, a pentamethylene group, a hexamethylene group, or the like. The alkenylene group may be a vinylene group, a 1-methylvinylene group, a propenylene group, a butenylene group, a pentenylene group, or the like. The alkynylene group may be an ethynylene group, a propynylene group, a butynylene group, a pentynylene group, a hexynylene group, or the like. The cycloalkylene group may be a cyclopropylene group, a cyclobutylene group, a cyclopentylene group, a cyclohexylene group, or the like. The arylene group may be a phenylene group, a tolylene group, a xylylene group, a naphthylene group, or the like.

Among these, an ethylene group, a propylene group, and a tetramethylene group are preferred from the perspective of the balance between the availability of raw materials, the viscosity of the resulting epoxy resin (A), and the flexibility of the resulting cured product.

In the structural unit Y represented by the general formula (3), R₇ and R₈ each independently denote a hydroxy group, a glycidyl ether group, or a 2-methyl glycidyl ether group, and R₉ and R₁₀ each independently denote a hydrogen atom or a methyl group. R₇ and R₈ preferably denote a hydroxy group, and R₉ and R₁₀ preferably denote a hydrogen atom.

As described above, the epoxy resin (A) used in the present embodiment is represented by the general formula (1). In the general formula (1), m₁ and m₂ denote the average value of repetition of the structural unit X and the structural unit Y, respectively, and each independently range from 0 to 25, and m₁ + m₂ ≥ 1.

In the general formula (1), R₁₁ and R₁₂ each independently denote a glycidyl ether group or a 2-methyl glycidyl ether group, R₁₃ and R₁₄ each independently denote a hydroxy group, a glycidyl ether group, or a 2-methyl glycidyl ether group, R₁₅ and R₁₆ denote a hydrogen atom or a methyl group, p₁, p₂, and q denote an average value of repetition, p₁ and p₂ each independently ranges from 0 to 5, and q ranges from 0.5 to 5. Among these, R₁₁ and R₁₂ preferably denote a glycidyl ether group, R₁₃ and R₁₄ preferably denote a hydroxy group, and R₁₅ and R₁₆ preferably denote a hydrogen atom. Furthermore, p₁ and p₂ preferably range from 0 to 2, and q preferably ranges from 0.5 to 2.

Furthermore, the epoxy equivalent of the epoxy resin (A) used in the present embodiment ranges from 500 to 10,000 g/eq. In this range, the resulting cured product has a good balance between flexibility and cross-linking density. From the perspective of ease of handling and a better balance between flexibility and cross-linking density, it is preferably in the range of 600 to 8,000 g/eq, more preferably 800 to 5,000 g/eq.

In the epoxy resin (A) in the present embodiment, an epoxy resin having both the structural unit X and the structural unit Y in a molecule thereof is, for example, a resin with the following structural formula:

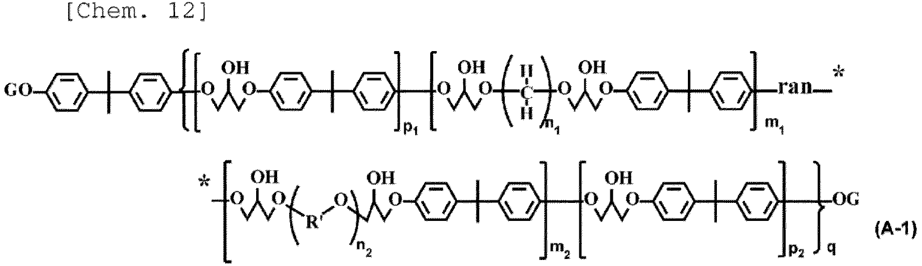

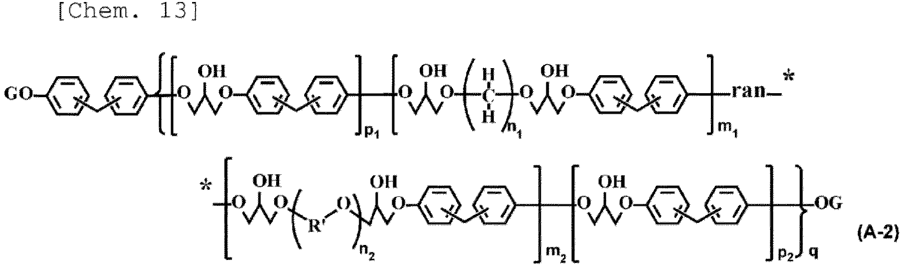

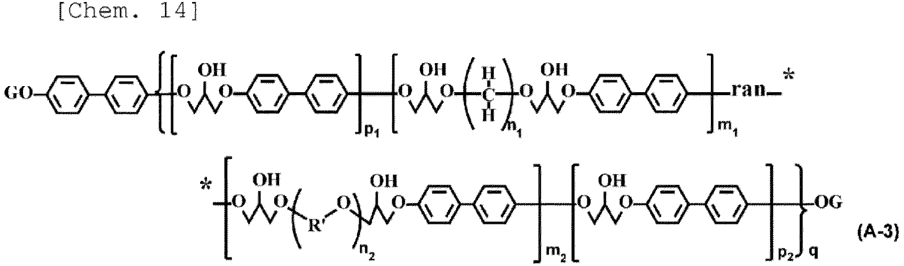

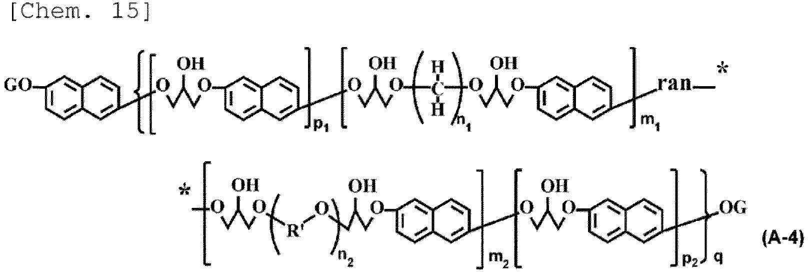

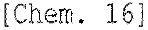

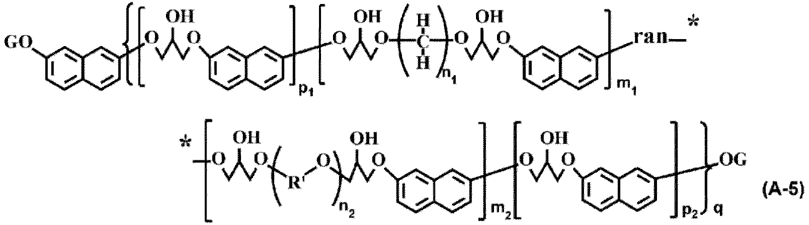

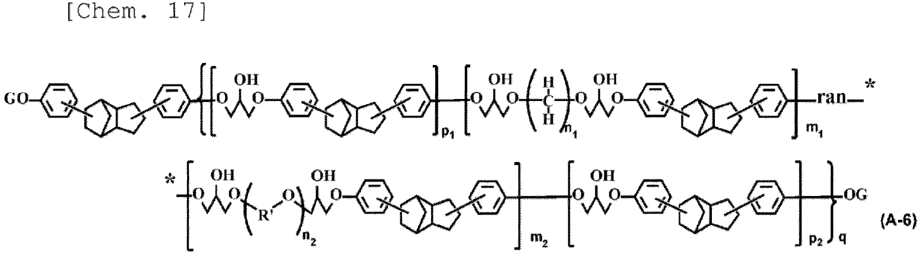

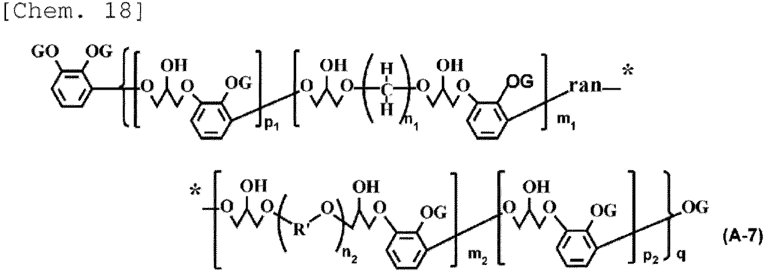

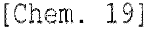

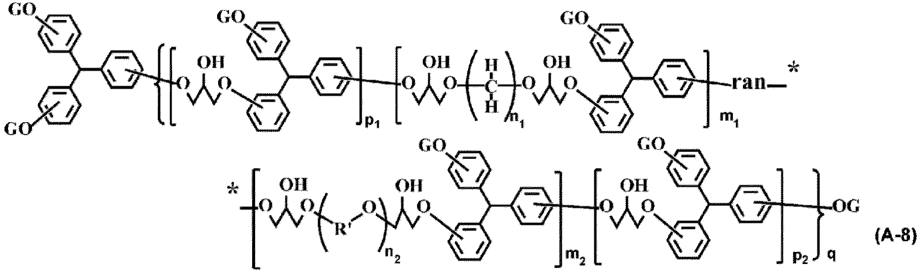

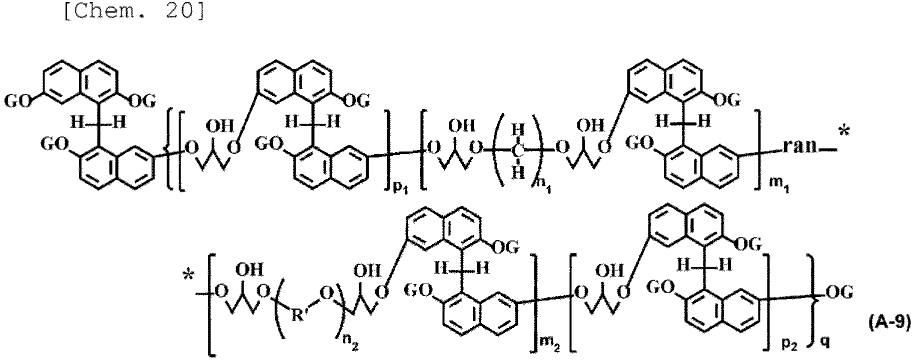

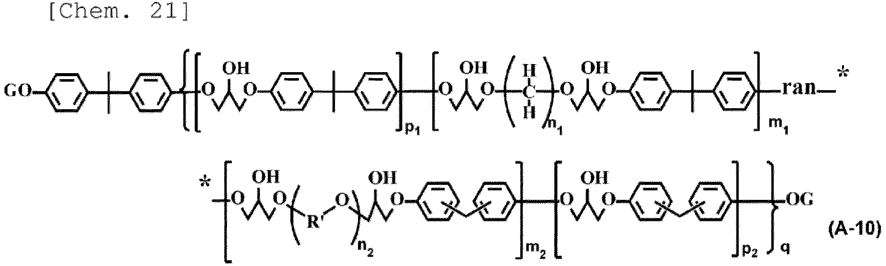

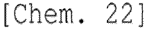

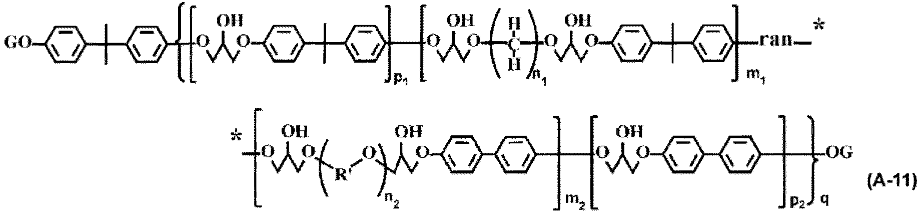

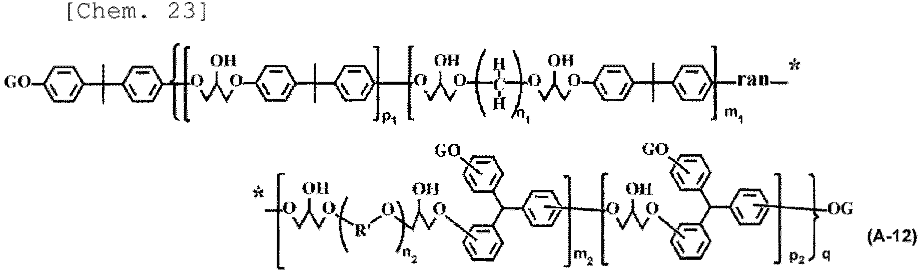

In each of the structural formulae (A-1) to (A-12), ran denotes a random bond, G denotes a glycidyl group, R' denotes a divalent hydrocarbon group with 2 to 12 carbon atoms, n₁ denotes an integer in the range of 4 to 16, n₂ denotes an average value of repeating unit in the range of 2 to 30, m₁, m₂, p₁, p₂, and q denote an average value of repetition, m₁ and m₂ each independently range from 0.5 to 25, p₁ and p₂ each independently range from 0 to 5, and q ranges from 0.5 to 5. Each repeating unit of the repeating unit may be the same or different.

Among the structural formulae, it is most preferable to use those represented by the structural formulae (A-1), (A-2), (A-3), (A-5), (A-7), (A-8), and (A-9) from the perspective of a cured product with a better balance of physical properties.

Among the epoxy resin (A), the epoxy resin with the structural unit X is, for example, a resin represented by the following structural formula:

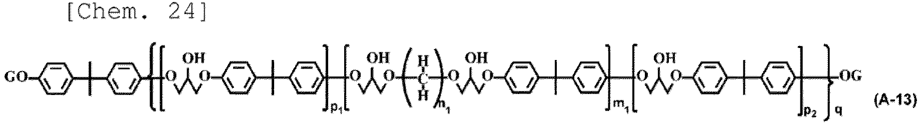

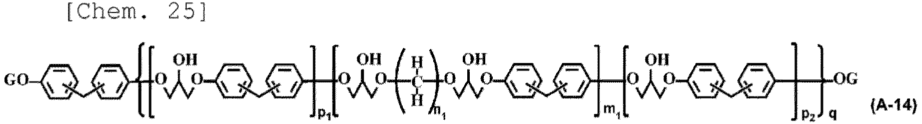

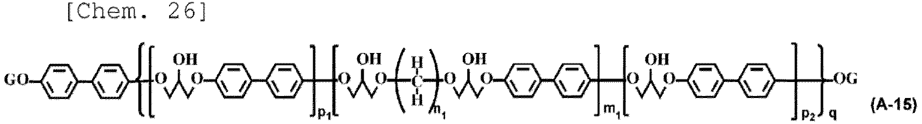

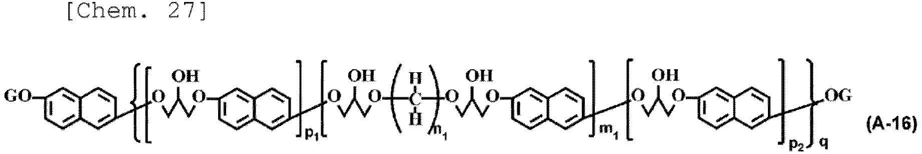

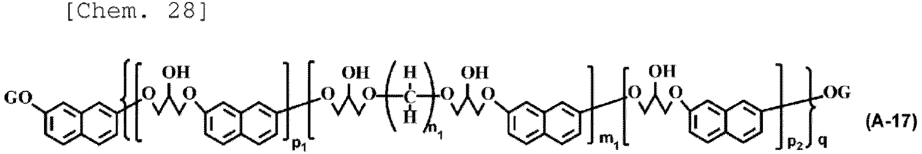

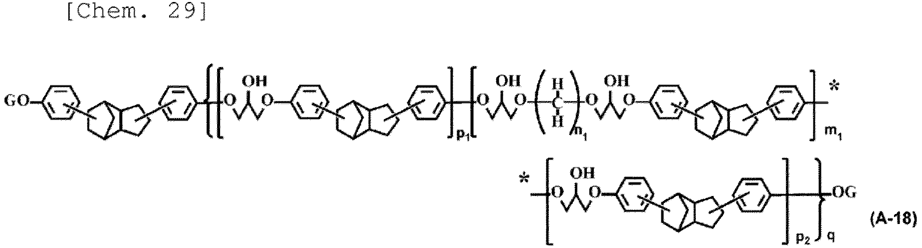

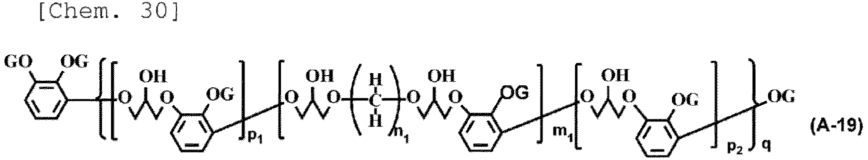

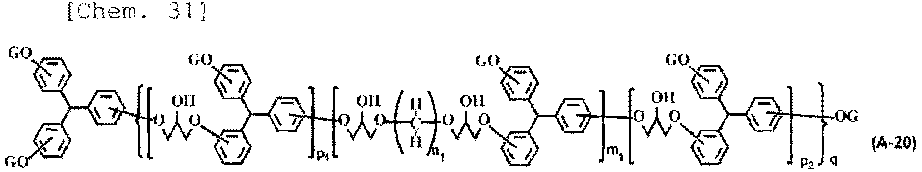

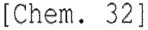

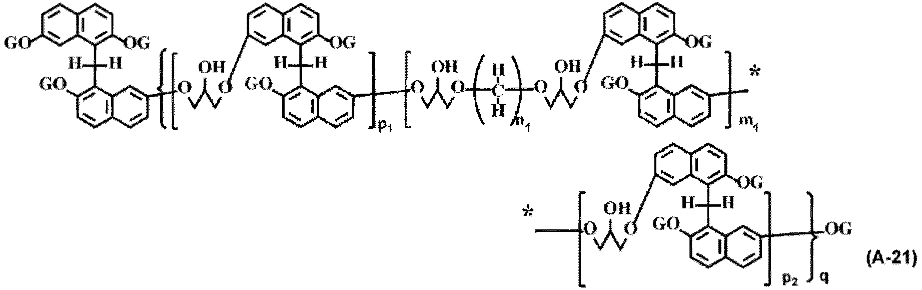

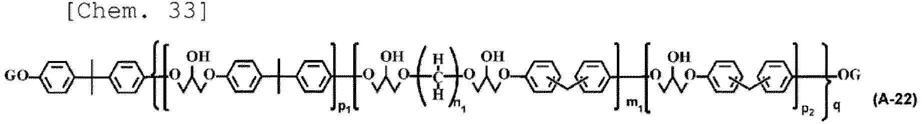

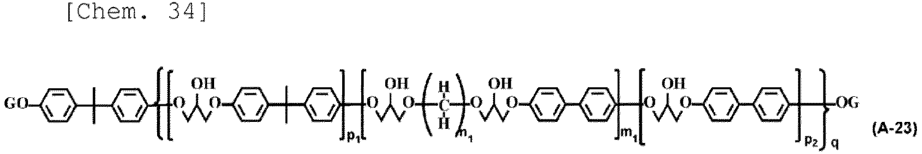

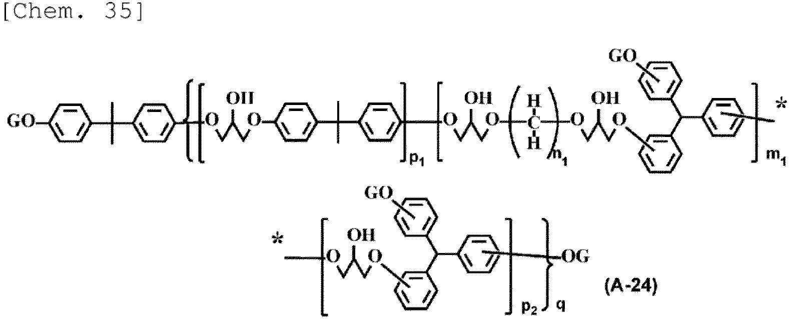

In the structural formulae (A-13) to (A-24), G denotes a glycidyl group, n₁ denotes an integer in the range of 4 to 16, m₁, p₁, p₂, and q denote an average value of repetition, m₁ ranges from 0.5 to 25, p₁ and p₂ each independently range from 0 to 5, and q ranges from 0.5 to 5. Each repeating unit of the repeating unit may be the same or different.

Among the structural formulae, it is preferable to use those represented by the structural formulae (A-13), (A-14), (A-15), (A-17), (A-19), (A-20), and (A-21) from the perspective of a cured product with a better balance of physical properties.

Among the epoxy resin (A), the epoxy resin with the structural unit Y is, for example, a resin represented by the following structural formula:

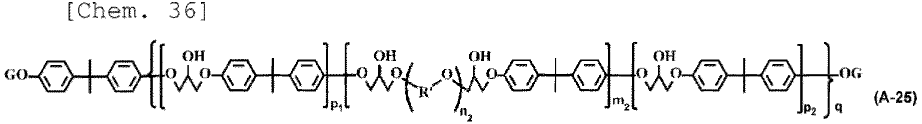

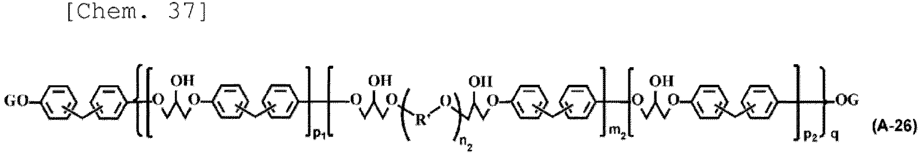

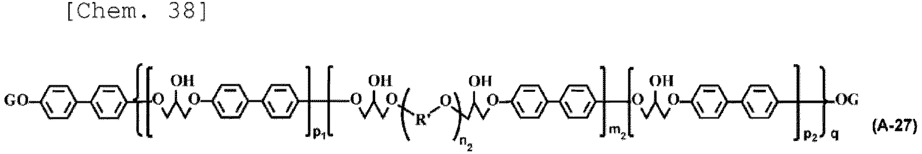

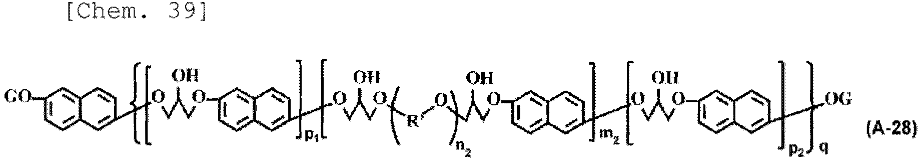

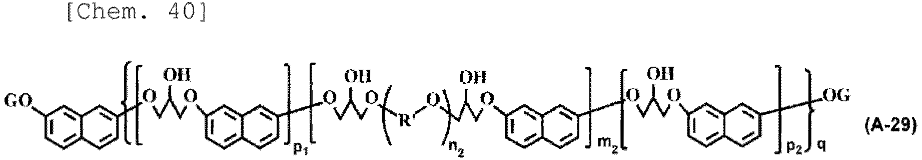

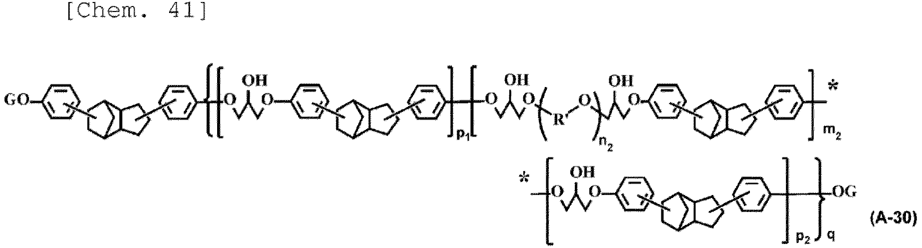

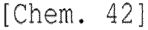

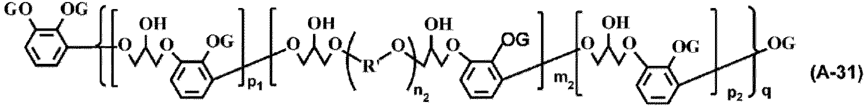

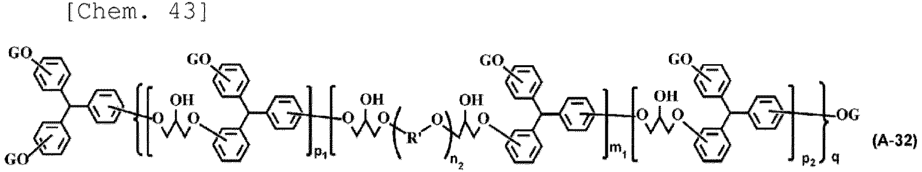

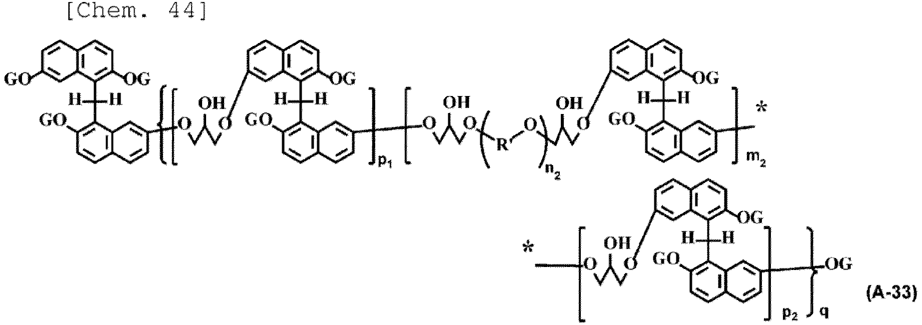

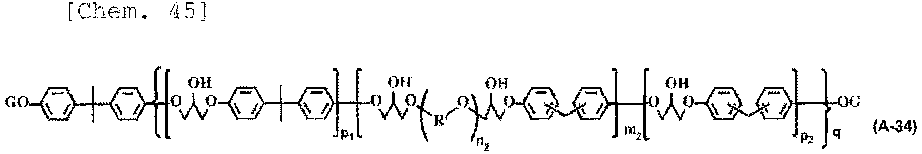

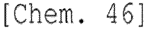

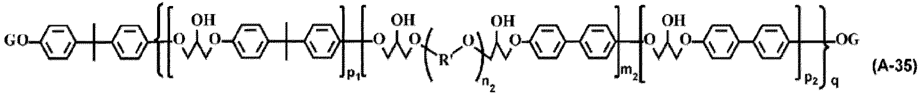

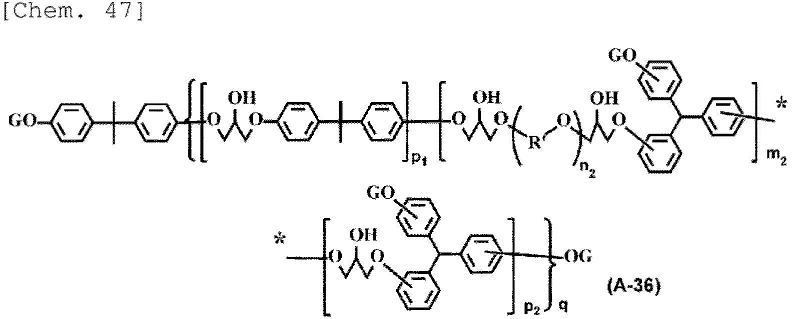

In the structural formulae (A-25) to (A-36), G denotes a glycidyl group, R' denotes a divalent hydrocarbon group with 2 to 12 carbon atoms, n₂ denotes an average value of repeating unit in the range of 2 to 30, m₂, p₁, p₂, and q denote an average value of repetition, m₂ ranges from 0.5 to 25, p₁ and p₂ each independently range from 0 to 5, and q ranges from 0.5 to 5. Each repeating unit of the repeating unit may be the same or different.

Among the structural formulae, it is most preferable to use those represented by the structural formulae (A-25), (A-26), (A-27), (A-29), (A-31), (A-32), and (A-33) from the perspective of a cured product with a better balance of physical properties.

The epoxy resin (A) used in the present embodiment may be produced by any method, for example, preferably by a method of reacting a diglycidyl ether (a1) of a dihydroxy compound having an alkylene chain or a polyether chain with an aromatic hydroxy compound (a2) at a mole ratio (a1)/(a2) in the range of 1/1.01 to 1/5.0 to produce a hydroxy compound [corresponding to a precursor or an intermediate of the epoxy resin (A)] and then reacting the hydroxy compound with an epihalohydrin (a3) from the perspective of the availability of raw materials and the ease of reaction.

The product produced by reacting the diglycidyl ether (a1) of the dihydroxy compound having the alkylene chain or the polyether chain with the aromatic hydroxy compound (a2) to produce a hydroxy compound may contain an unreacted aromatic hydroxy compound (a2). In the synthesis of the epoxy resin (A) used in the present embodiment, the product may be directly subjected to the reaction with the epihalohydrin (a3) in the next step, or the unreacted aromatic hydroxy compound (a2) may be removed. From the perspective of the balance between toughness and flexibility of a cured product produced from the epoxy resin composition according to the present embodiment containing the resulting epoxy resin (A), the abundance of the unreacted aromatic hydroxy compound (a2) in the hydroxy compound to be subjected to the next step preferably ranges from 0.1% to 30% based on mass.

The unreacted aromatic hydroxy compound (a2) may be removed by any method, including various methods. Examples thereof include a column chromatography separation method utilizing a difference in polarity, a fractional distillation and fractionation method utilizing a difference in boiling point, and an alkaline aqueous solution extraction method utilizing a difference in solubility in alkaline water. Among them, the alkaline aqueous solution extraction method is preferred in terms of efficiency and the like because it is not accompanied by thermal alteration. At this time, an organic solvent used for dissolving an object may be one that is not mixed with water, such as toluene or methyl isobutyl ketone, particularly preferably methyl isobutyl ketone from the perspective of solubility with the object.

The diglycidyl ether (a1) of a dihydroxy compound with an alkylene chain or a polyether chain is not particularly limited. For example, the diglycidyl ether with the alkylene chain may be 1,4-butanediol diglycidyl ether, 1,6-hexanediol diglycidyl ether, 1,9-nonanediol diglycidyl ether, 1,11-undecanediol diglycidyl ether, 1,12-dodecanediol diglycidyl ether, 1,13-tridecanediol diglycidyl ether, 1,14-tetradecanediol diglycidyl ether, 1,15-pentadecanediol diglycidyl ether, 1,16-hexadecanediol diglycidyl ether, 2-methyl-1,11-undecanediol diglycidyl ether, 3-methyl-1,11-undecanediol diglycidyl ether, 2,6,10-trimethyl-1,11-undecanediol diglycidyl ether, or the like. The diglycidyl ether with the polyether chain may be poly(ethylene glycol) diglycidyl ether, poly(propylene glycol) diglycidyl ether, poly(tetramethylene glycol) diglycidyl ether, poly(pentamethylene glycol) diglycidyl ether, poly(hexamethylene glycol) diglycidyl ether, poly(heptamethylene glycol) diglycidyl ether, or the like. These may contain an organochlorine impurity produced in glycidyl etherification of a hydroxy compound and may contain an organochlorine, such as 1-chloromethyl-2-glycidyl ether (chloromethyl form) represented by the following structure. These diglycidyl ethers may be used alone or in combination.

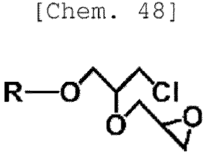

Among these, 1,4-butanediol diglycidyl ether, 1,6-hexanediol diglycidyl ether, 1,9-nonanediol diglycidyl ether, 1,12-dodecanediol diglycidyl ether, poly(ethylene glycol) diglycidyl ether, poly(propylene glycol) diglycidyl ether, and poly(tetramethylene glycol) diglycidyl ether are preferably used in terms of a good balance between flexibility and heat resistance of the resulting cured product.

Furthermore, the diglycidyl ether with the alkylene chain and the diglycidyl ether with the polyether chain can be simultaneously reacted with the aromatic hydroxy compound (a2) to produce a hydroxy compound with both the structural unit X and the structural unit Y, and the hydroxy compound can be further reacted with the epihalohydrin (a3) to produce the epoxy resin (A) with both the structural unit X and the structural unit Y.

The aromatic hydroxy compound (a2) is, for example, but not limited to, a dihydroxybenzene, such as hydroquinone, resorcin, or catechol; trihydroxybenzene, such as pyrogallol, 1,2,4-trihydroxybenzene, or 1,3,5-trihydroxybenzene; a triphenylmethane phenol, such as 4,4',4"-trihydroxytriphenylmethane; a dihydroxynaphthalene, such as 1,6-dihydroxynaphthalene, 2,7-dihydroxynaphthalene, 1,4-dihydroxynaphthalene, 1,5-dihydroxynaphthalene, 2,3-dihydroxynaphthalene, or 2,6-dihydroxynaphthalene; a tetrafunctional phenol, such as 1,1'-methylenebis-(2,7-naphthalenediol), 1,1'-binaphthalene-2,2',7,7'-tetraol, or 1,1'-oxybis-(2,7-naphthalenediol), produced by a coupling reaction of a dihydroxynaphthalene; a bisphenol, such as bis(4-hydroxyphenyl)methane, 2,2-bis(4-hydroxyphenyl)propane, 2,2-bis(3-methyl-4-hydroxyphenyl)propane, 1,1-bis(4-hydroxyphenyl)cyclohexane, 1,1-bis(4-hydroxyphenyl)-1-phenylethane, or bis(4-hydroxyphenyl)sulfone; a biphenol, such as 2,2'-biphenol, 4,4'-biphenol, (1,1'-biphenyl)-3,4-diol, 3,3'-dimethyl-(1,1'-biphenyl)-4,4'-diol, 3-methyl-(1,1'-biphenyl)-4,4'-diol, 3,3',5,5'-tetramethylbiphenyl-2,2'-diol, 3,3',5,5'-tetramethylbiphenyl-4,4'-diol, 5-methyl-(1,1'-biphenyl)-3,4'diol, 3'-methyl-(1,1'-biphenyl)-3,4'diol, or 4'-methyl-(1,1'-biphenyl)-3,4'diol; a phenol with an alicyclic structure, such as a polyaddition product of phenol and dicyclopentadiene or a polyaddition product of phenol and a terpene compound; a naphthol, such as bis(2-hydroxy-1-naphthyl)methane or bis(2-hydroxy-1-naphthyl)propane; or a condensation reaction product of phenol and phenylene dimethyl chloride or biphenylene dimethyl chloride, that is, a so-called Xylok phenolic resin. These may be used alone or in combination. Furthermore, a compound with a structure having a methyl group, a t-butyl group, or a halogen atom as a substituent on an aromatic nucleus of each of these compounds is also mentioned. The phenol with an alicyclic structure or the Xylok phenolic resin may contain not only a bifunctional component but also a tri- or higher functional component at the same time but, in the present embodiment, may be used as it is, or only a bifunctional component may be taken out and used through a purification step, such as a column.

Among these, a bisphenol is preferred in terms of a good balance between flexibility and toughness of the resulting cured product, and bis(4-hydroxyphenyl)methane and 2,2-bis(4-hydroxyphenyl)propane are particularly preferred in terms of remarkable performance of imparting toughness. Furthermore, when the curability and heat resistance of a cured product are regarded as important, a dihydroxynaphthalene is preferred, and 2,7-dihydroxynaphthalene is particularly preferred in terms of remarkably imparting high curability. When the moisture resistance of a cured product is regarded as important, a compound with an alicyclic structure is preferably used.

The reaction ratio (a1)/(a2) of the diglycidyl ether (a1) of the dihydroxy compound having the alkylene chain or the polyether chain to the aromatic hydroxy compound (a2) preferably ranges from 1/1.01 to 1/5.0 (mole ratio), more preferably 1/1.02 to 1/3.0 (mole ratio), from the perspective of reaction efficiency.

A reaction between the diglycidyl ether (a1) of the dihydroxy compound having the alkylene chain or the polyether chain and the aromatic hydroxy compound (a2) is preferably performed in the presence of a catalyst. The catalyst may be one of various catalysts, for example, a hydroxide of alkaline (earth) metal, such as sodium hydroxide, potassium hydroxide, lithium hydroxide, or calcium hydroxide; an alkali metal carbonate, such as sodium carbonate or potassium carbonate; a phosphorus compound, such as triphenylphosphine; a quaternary ammonium salt, such as chloride, bromide, or iodide of DMP-30, DMAP, tetramethylammonium, tetraethylammonium, tetrabutylammonium, or benzyltributylammonium, or chloride, bromide, or iodide of tetramethylphosphonium, tetraethylphosphonium, tetrabutylphosphonium, or benzyltributylphosphonium; a tertiary amine, such as triethylamine, N,N-dimethylbenzylamine, 1,8-diazabicyclo[5.4.0]undecene, or 1,4-diazabicyclo[2.2.2]octane; an imidazole, such as 2-ethyl-4-methylimidazole or 2-phenylimidazole; or the like. These catalysts may be used in combination. Among these, sodium hydroxide, potassium hydroxide, triphenylphosphine, and DMP-30 are preferred in terms of a rapid reaction and a large effect of decreasing the amount of impurities. The amount of the catalyst to be used is preferably, but not limited to, in the range of 0.0001 to 0.1 mol per mol of the aromatic hydroxy group in the aromatic hydroxy compound (a2). The catalyst may be of any form, such as an aqueous solution form or a solid form.

A reaction between the diglycidyl ether (a1) of the dihydroxy compound having the alkylene chain or the polyether chain and the aromatic hydroxy compound (a2) may be performed in the absence of a solvent or in the presence of an organic solvent. The organic solvent to be used is, for example, methyl cellosolve, ethyl cellosolve, toluene, xylene, methyl isobutyl ketone, dimethyl sulfoxide, propyl alcohol, butyl alcohol, or the like. The amount of the organic solvent to be used typically ranges from 50% to 3000 by mass, preferably 100% to 250% by mass, based on the total mass of charged raw materials. These organic solvents may be used alone or in combination. No solvent is preferred to perform the reaction rapidly, whereas dimethyl sulfoxide is preferred in terms of less impurities in the final product.

For the reaction, the reaction temperature typically ranges from 50°C to 180°C, and the reaction time typically ranges from 1 to 30 hours. In terms of less impurities in the final product, the reaction temperature preferably ranges from 100°C to 160°C. When the resulting compound is highly colored, an antioxidant or a reducing agent may be added to reduce the coloring. The antioxidant is, for example, but not limited to, a hindered phenol compound, such as a 2,6-dialkylphenol derivative, a divalent sulfur compound, a phosphite compound containing a trivalent phosphorus atom, or the like. The reducing agent is, for example, but not limited to, hypophosphorous acid, phosphorous acid, thiosulfuric acid, sulfurous acid, hydrosulfite, a salt thereof, or the like.

After completion of the reaction, neutralization or washing with water may be performed until the reaction mixture has a pH in the range of 3 to 7, preferably 5 to 7. The neutralization or washing with water may be performed in the usual manner. For example, when a basic catalyst is used, an acidic material, such as hydrochloric acid, sodium dihydrogen phosphate, p-toluenesulfonic acid, or oxalic acid, can be used as a neutralizing agent. After neutralization or washing with water, if necessary, the solvent can be distilled off by heating under reduced pressure to concentrate the product and thereby produce a hydroxy compound.

The glycidyl ether with the alkylene chain and the glycidyl ether with the polyether chain can be used in combination to produce a hydroxy compound with both the structural unit X and the structural unit Y. At this time, for example, compounds represented by the following structural formulae can be mentioned as preferred structures.

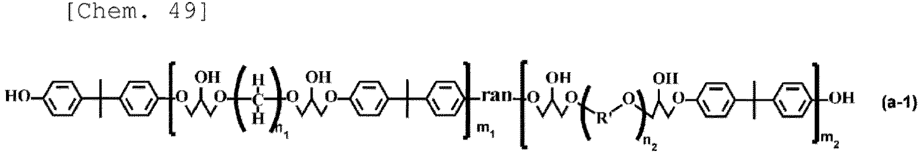

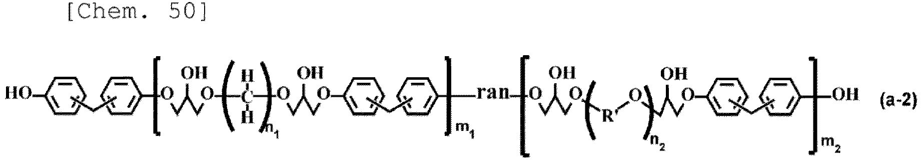

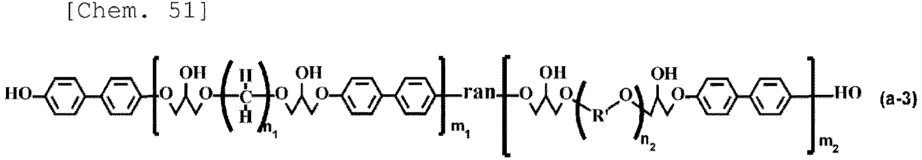

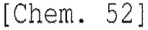

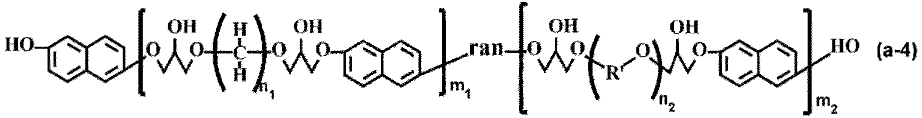

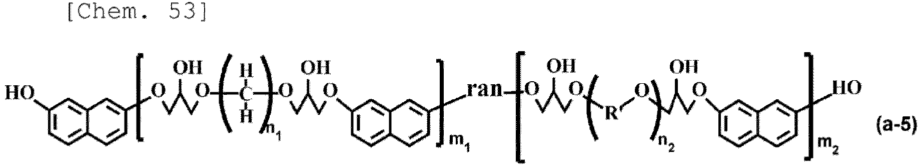

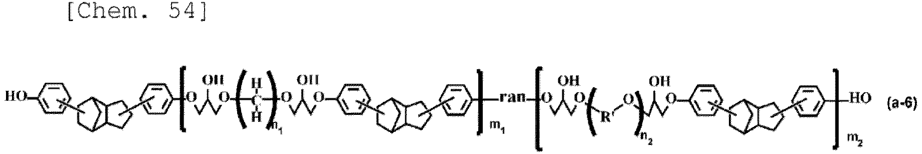

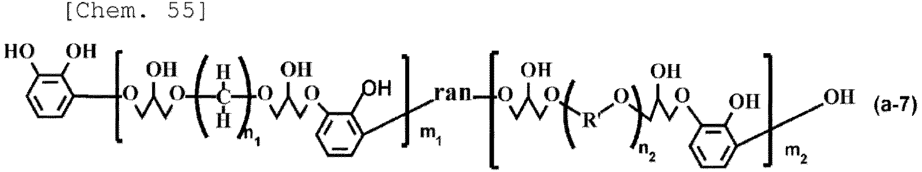

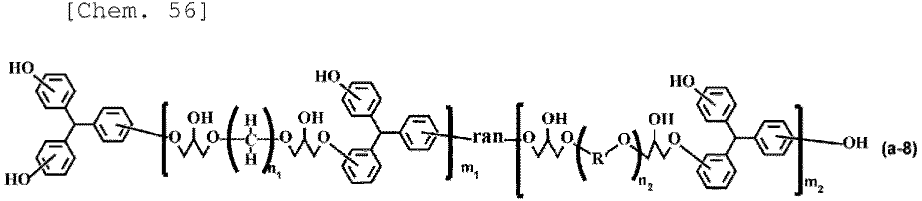

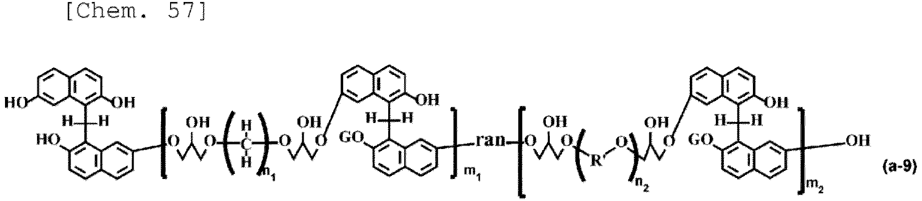

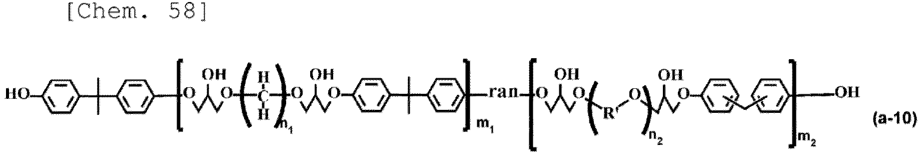

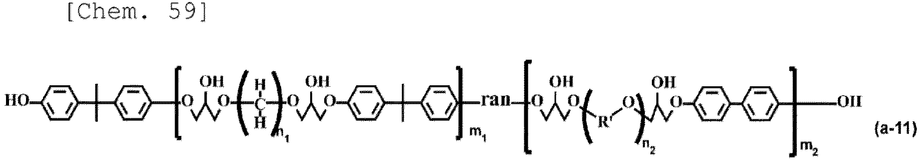

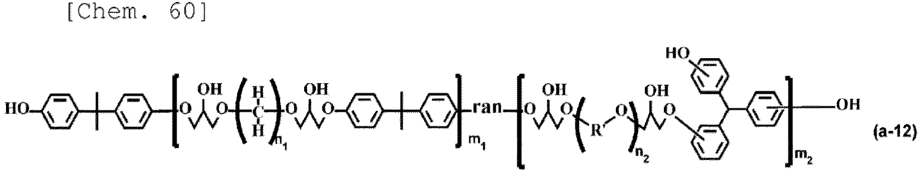

In each structural formula, ran denotes a random bond, R' denotes a divalent hydrocarbon group with 2 to 12 carbon atoms, n₁ denotes an integer in the range of 4 to 16, n₂ denotes an average value of repeating unit in the range of 2 to 30, and m₁ and m₂ each independently denote an average value of repetition in the range of 0.5 to 25. Each repeating unit of the repeating unit may be the same or different.

Furthermore, the glycidyl ether with the alkylene chain can be used as a raw material to produce a hydroxy compound with the structural unit X. At this time, for example, compounds represented by the following structural formulae can be mentioned as preferred structures.

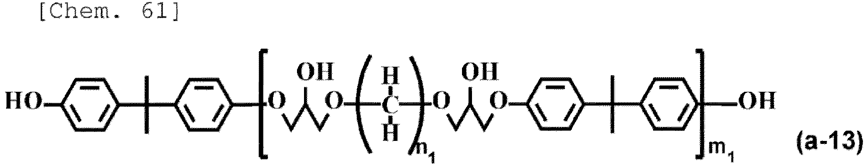

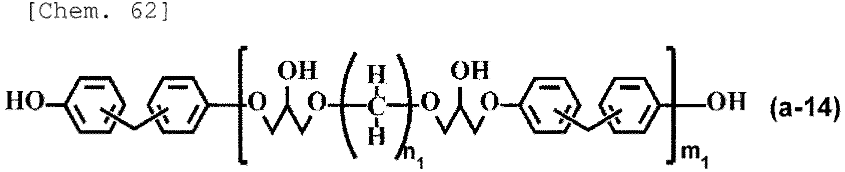

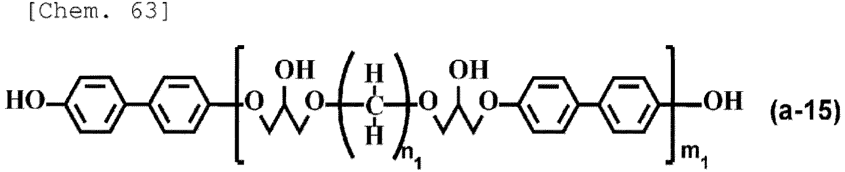

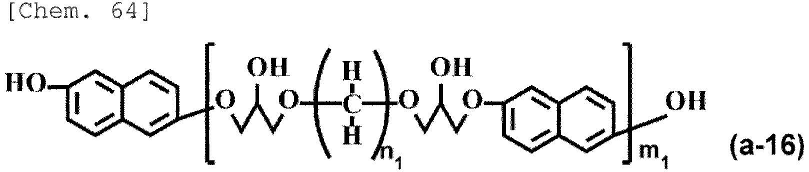

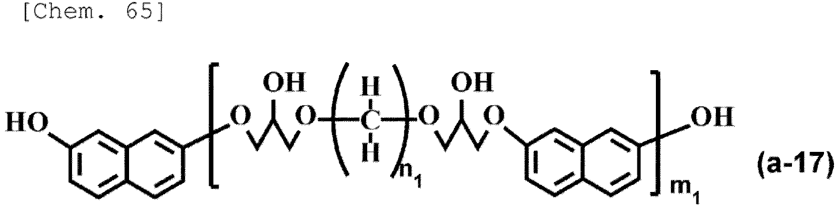

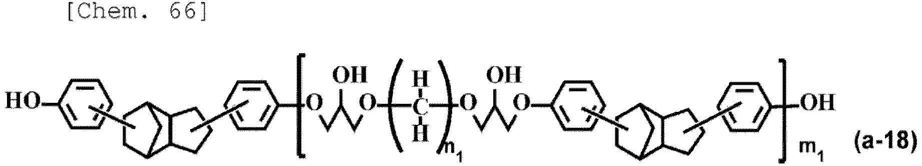

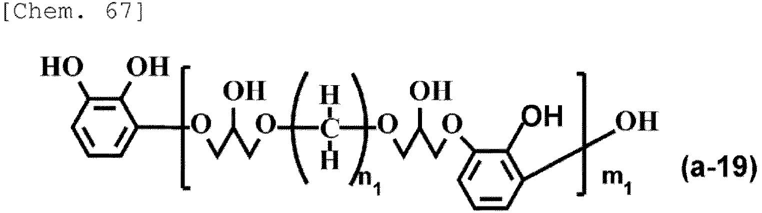

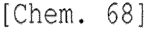

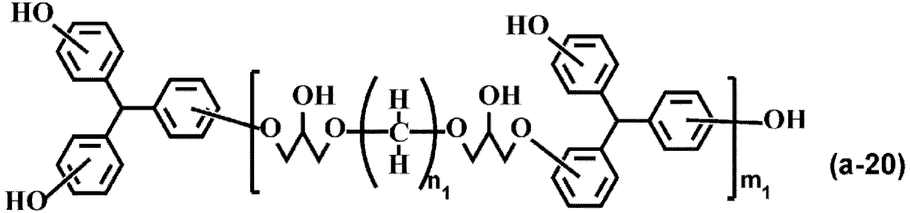

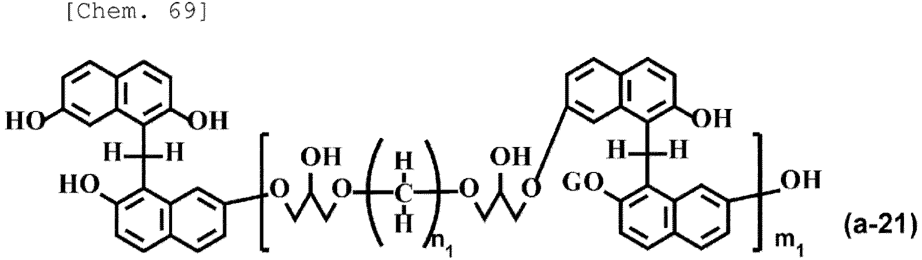

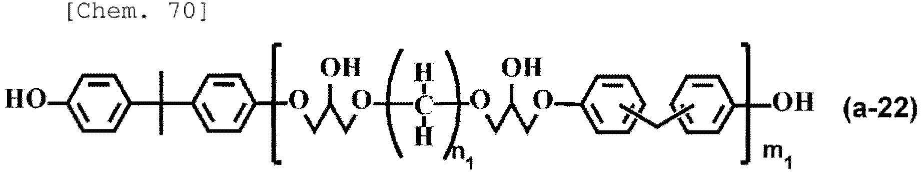

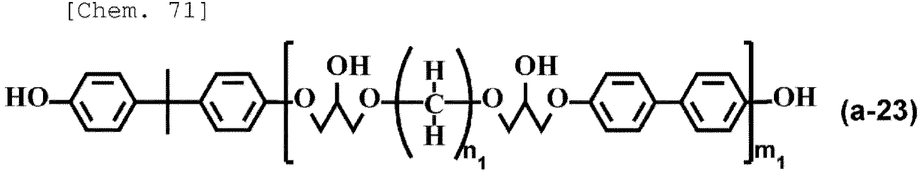

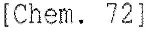

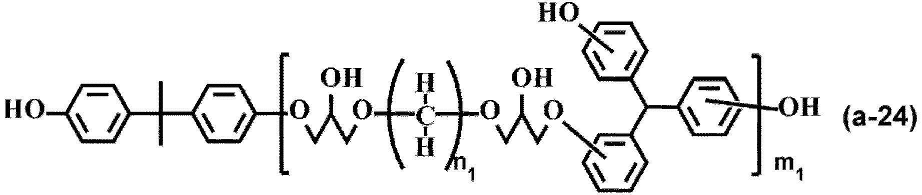

In each structural formula, n₁ denotes an integer in the range of 4 to 16, and m₁ denotes an average value of repetition in the range of 0.5 to 25.

Furthermore, the glycidyl ether with an polyether chain can be used as a raw material to produce a hydroxy compound with the structural unit Y. At this time, for example, compounds represented by the following structural formulae can be mentioned as preferred structures.

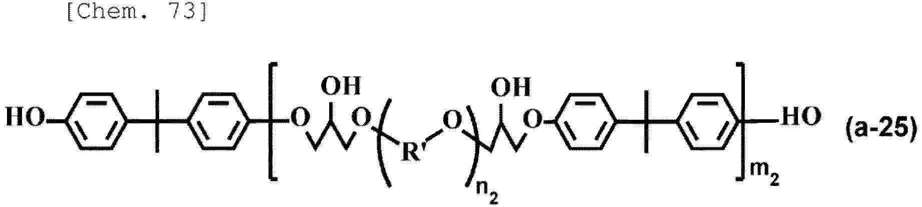

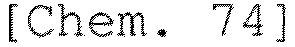

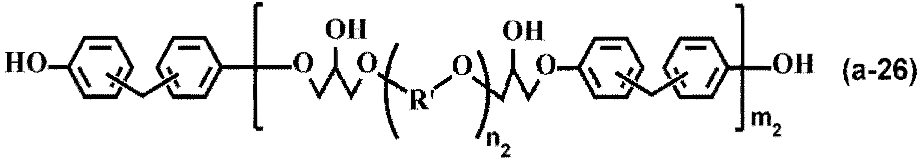

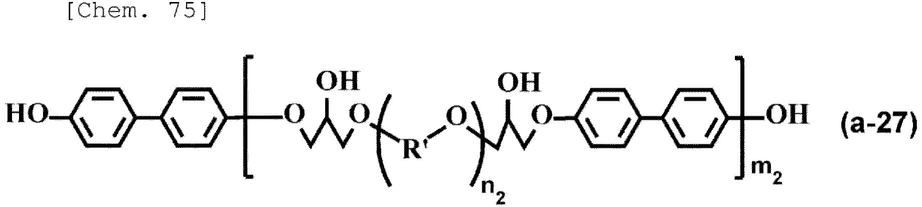

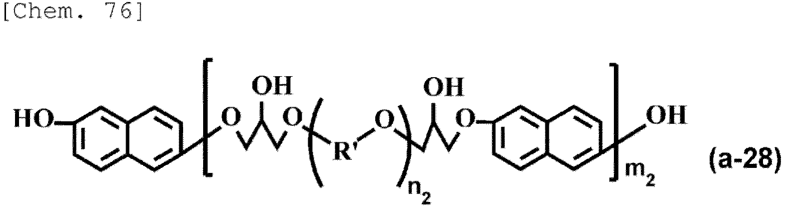

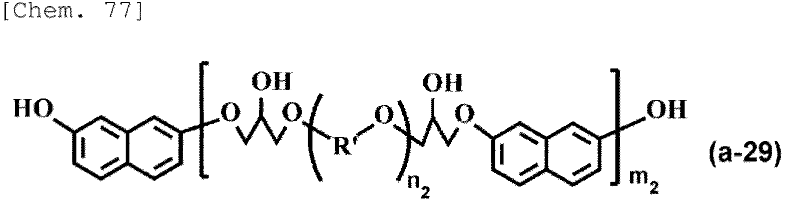

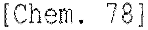

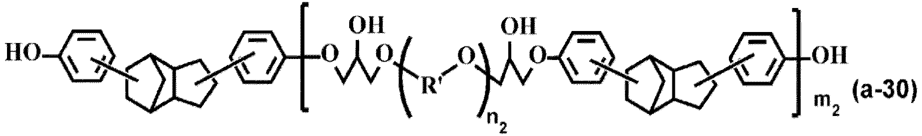

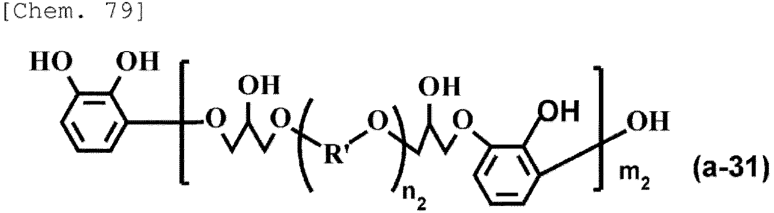

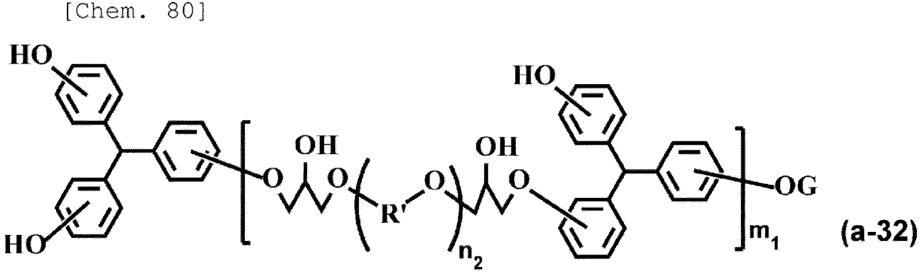

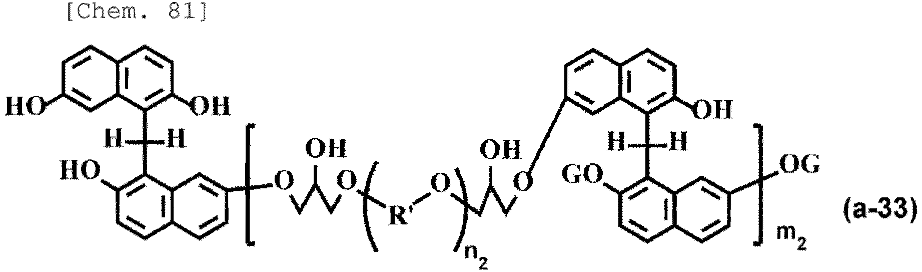

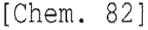

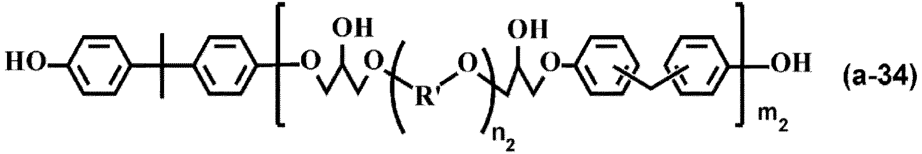

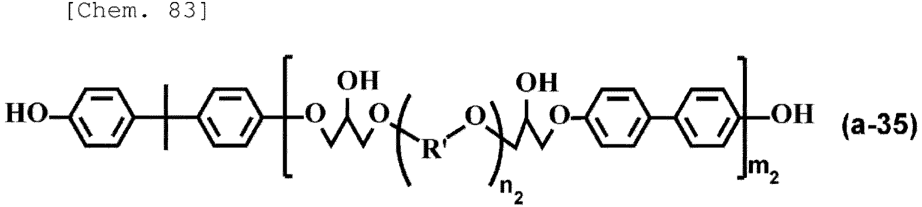

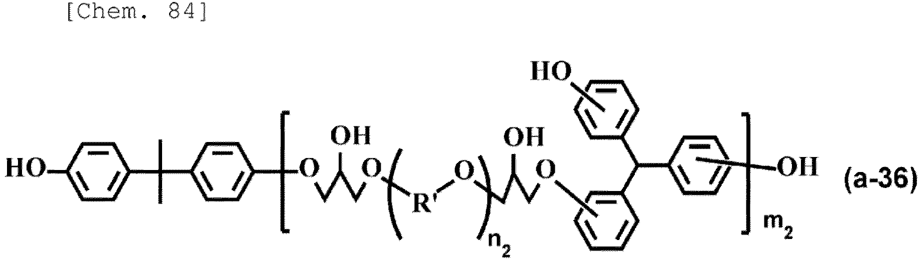

In each structural formula, R' denotes a divalent hydrocarbon group with 2 to 12 carbon atoms, n₂ denotes an average value of repeating unit in the range of 2 to 30, and m₂ denotes an average value of repetition in the range of 0.5 to 25. Each repeating unit of the repeating unit may be the same or different.

### [Method for Producing Epoxy Resin (A)]

In a method for producing the epoxy resin (A), a method for a glycidyl etherification reaction of the precursor (intermediate) hydroxy compound produced as described above may be, but is not limited to, a method of reacting a phenolic hydroxy group with an epihalohydrin, a method of olefinating a phenolic hydroxy group and oxidizing a carbon-carbon double bond of the olefin using an oxidizing agent, or the like. Among these, a method using the epihalohydrin (a3) is preferred in terms of availability of raw materials and the ease of reaction.

The method using the epihalohydrin (a3) is, for example, a method of adding 0.3 to 100 mol of the epihalohydrin (a3) to 1 mol of an aromatic hydroxy group of the hydroxy compound produced as described above and reacting the mixture at a temperature in the range of 20°C to 120°C for 0.5 to 10 hours while adding 0.9 to 2.0 mol of a basic catalyst all at once or gradually to 1 mol of the aromatic hydroxy group of the hydroxy compound. As for the addition amount of the epihalohydrin (a3), as the excess amount of the epihalohydrin (a3) increases, the resulting epoxy resin has a structure closer to a theoretical structure, and the amount of a secondary hydroxy group formed by a reaction between an unreacted aromatic hydroxy group and an epoxy group can be reduced. From such a perspective, the range of 2.5 to 100 equivalents is preferred. The basic catalyst may be a solid or an aqueous solution thereof. When an aqueous solution thereof is used, a method of continuously adding it, continuously distilling off water and the epihalohydrin (a3) from the reaction mixture under reduced pressure or at atmospheric pressure, and separating the liquid to remove water and continuously return the epihalohydrin (a3) to the reaction mixture may also be used.

In industrial production, all the epihalohydrin (a3) in the first batch of epoxy resin production is fresh epihalohydrin (a3), but in the subsequent batches the epihalohydrin (a3) recovered from a crude reaction product is preferably used in combination with fresh epihalohydrin (a3) in an amount corresponding to the amount consumed and lost in the reaction. At this time, the epihalohydrin (a3) to be used is, for example, but not limited to, epichlorohydrin, epibromohydrin, or the like. Among these, epichlorohydrin is preferred in terms of availability.

The basic catalyst may be, but is not limited to, an alkaline-earth metal hydroxide, an alkali metal carbonate, an alkali metal hydroxide, or the like. In particular, an alkali metal hydroxide, for example, sodium hydroxide, potassium hydroxide, or the like, is preferred in terms of high catalytic activity in an epoxy resin synthesis reaction. When used, these alkali metal hydroxides may be used in the form of an aqueous solution of approximately 10% to 55% by mass or may be used in the solid form.

Furthermore, the combined use of an organic solvent can increase the reaction rate in the synthesis of an epoxy resin. Such an organic solvent is, for example, but not limited to, a ketone, such as acetone or methyl ethyl ketone; an alcohol, such as methanol, ethanol, 1-propyl alcohol, isopropyl alcohol, 1-butanol, secondary butanol, or tertiary butanol; a cellosolve, such as methyl cellosolve or ethyl cellosolve; an ether, such as tetrahydrofuran, 1,4-dioxane, 1,3-dioxane, or diethoxyethane; an aprotic polar solvent, such as acetonitrile, dimethyl sulfoxide, or dimethylformamide; or the like. These organic solvents may be used alone, or two or more of the organic solvents may be appropriately used in combination to adjust the polarity.

After a reaction product of such a glycidylation reaction is washed with water, unreacted epihalohydrin (a3) and an organic solvent used in combination are distilled off by heating under reduced pressure. Furthermore, to decrease the amount of hydrolyzable halogen in an epoxy resin, the epoxy resin may be dissolved again in an organic solvent, such as toluene, methyl isobutyl ketone, or methyl ethyl ketone, and an aqueous solution of an alkali metal hydroxide, such as sodium hydroxide or potassium hydroxide, may be added to further perform the reaction. In this case, a phase-transfer catalyst, such as a quaternary ammonium salt or a crown ether, may be present to improve the reaction rate.

The amount of phase-transfer catalyst, if present, is preferably in the range of 0.1% to 3.0% by mass based on the epoxy resin used. After completion of the reaction, the resulting salt can be removed by filtration, washing with water, or the like, and the solvent, such as toluene or methyl isobutyl ketone, can be distilled off by heating under reduced pressure, thereby producing a high-purity epoxy resin.

In the present embodiment, a cured product produced by curing an epoxy resin composition preferably has a phase-separated structure from the perspective of imparting further flexibility and facilitating high disassemblability by a compound (C) described later. From this perspective, the epoxy resin (A) is used in combination with an epoxy resin (B) with an epoxy equivalent in the range of 100 to 300 g/eq.

### [Epoxy Compound B]

The epoxy resin (B) according to the present embodiment may have an epoxy equivalent in the range of 100 to 300 g/eq and may have any structure. The epoxy resin (B) may be a liquid epoxy resin, such as a bisphenol A epoxy resin, a bisphenol F epoxy resin, a bisphenol S epoxy resin, a bisphenol AD epoxy resin, a polyhydroxybenzene epoxy resin, a polyhydroxynaphthalene epoxy resin, a biphenyl epoxy resin, or a tetramethylbiphenyl epoxy resin; a brominated epoxy resin, such as brominated phenol novolac epoxy resin; a solid bisphenol A epoxy resin, a phenol novolac epoxy resin, a cresol novolac epoxy resin, a triphenylmethane epoxy resin, a tetraphenylethane epoxy resin, a dicyclopentadiene-phenol addition reaction epoxy resin, a phenolaralkyl epoxy resin, a phenylene ether epoxy resin, a naphthylene ether epoxy resin, a naphthol novolac epoxy resin, a naphthol aralkyl epoxy resin, a naphthol-phenol-co-condensed novolac epoxy resin, a naphthol-cresol-co-condensed novolac epoxy resin, an aromatic hydrocarbon formaldehyde resin modified phenolic resin type epoxy resin, or a biphenyl-modified novolac epoxy resin. These may be used alone or in combination and are preferably selected according to the intended use and the physical properties of the cured product.

In particular, epoxy resins with an epoxy equivalent in the range of 100 to 300 g/eq are preferably used among liquid epoxy resins, such as bisphenol A epoxy resins, bisphenol F epoxy resins, bisphenol S epoxy resins, bisphenol AD epoxy resins, polyhydroxybenzene epoxy resins, polyhydroxynaphthalene epoxy resins, biphenyl epoxy resins, and tetramethylbiphenyl epoxy resins, and epoxy resins with an epoxy equivalent in the range of 100 to 300 g/eq are particularly preferably used among bisphenol A epoxy resins, bisphenol F epoxy resins, bisphenol S epoxy resins, and bisphenol AD epoxy resins.

In the present embodiment, the use ratio (A):(B) of the epoxy resin (A) to the epoxy resin (B) based on mass is, but not limited to, in the range of 97:3 to 3:97, preferably 10:90 to 90:10, particularly preferably 80:20 to 20:80, from the perspective of easy phase separation in the cured product. The phase separation in the cured product forms a sea-island structure, achieves both the adhesiveness and the stress relaxation ability of the cured product, in particular, provides high adhesive strength in a wide temperature range, and has an effect of reducing the shrinkage ratio due to the heat curing of the resin composition.

When the compound (C) with the anthracene dimer skeleton described later has a group containing an epoxy group, the epoxy resin (B) according to the present embodiment does not contain the compound (C) with the anthracene dimer skeleton.

### [Compound (C) with Anthracene Dimer Skeleton]

The compound (C) with the anthracene dimer skeleton may have only one anthracene dimer skeleton in the molecule or may have two or more (for example, 2 to 4) anthracene dimer skeletons in the molecule. It is thought that the compound (C) with two or more anthracene dimer skeletons in the molecule has higher disassemblability. The compound (C) has two or more groups containing an epoxy group or two or more groups containing a curable group.

The group containing the epoxy group may be a group represented by the general formula -L-E (L denotes a single bond or a divalent linking group, and E denotes an epoxy group). L may be any divalent linking group. L may be an alkylene group, a cycloalkylene group, an arylene group, an ether group, a carbonyl group, a carboxy group (-COO or - OCO-), a sulfide group, a divalent group formed by linking two or more groups selected from these groups, or the like. L is, for example, a divalent organic group with 1 to 10 carbon atoms.

The curable group of the group containing the curable group may be a substituent capable of reacting with an epoxy group. The group containing the curable group is preferably at least one selected from the group consisting of a group containing an amino group, a group containing a hydroxy group, a group containing a carboxy group, a group containing an acid anhydride group, a group containing an amide group, a group containing an imide group, a group containing a thiol group, a group containing an ester group, and a group containing a maleimide group, more preferably a group containing an amino group, a group containing a hydroxy group, or a group containing a carboxy group.

Preferred embodiments and specific examples of the group containing the epoxy group and the group containing the curable group are described in detail below with reference to the general formulae (I-1) and (I-2) described later.

### (Compound (C-i1) with Anthracene Dimer Skeleton)

The compound (C) with the anthracene dimer skeleton is preferably a compound (C-i1) with an anthracene dimer skeleton represented by the following general formula (I-1) (hereinafter sometimes simply referred to as a "compound (C-i1) ") .

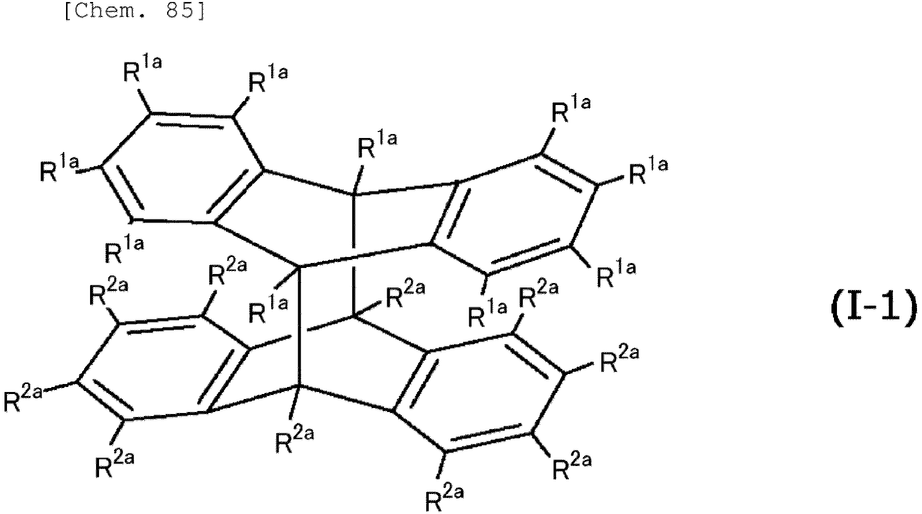

In the general formula (I-1), a plurality of R^{1a}s each independently denote a hydrogen atom or a monovalent substituent, provided that at least one R^{1a} denotes a group containing an epoxy group, and a plurality of R^{2a}s each independently denote a hydrogen atom or a monovalent substituent, provided that at least one R^{2a} denotes a group containing an epoxy group.

From the perspective of achieving both adhesiveness and high disassemblability, one to three of R^{1a}s are preferably a group or groups containing an epoxy group, one or two of R^{1a}s are more preferably a group or groups containing an epoxy group, and one of R^{1a}s is still more preferably a group containing an epoxy group. Likewise, one to three of R^{2a}s are preferably a group or groups containing an epoxy group, one or two of R^{2a}s are more preferably a group or groups containing an epoxy group, and one of R^{2a}s is still more preferably a group containing an epoxy group.

The group containing the epoxy group of R^{1a} and R^{2a} may be a group represented by the general formula -L-E (L denotes a single bond or a divalent linking group, and E denotes an epoxy group). L may be any divalent linking group. L may be an alkylene group, a cycloalkylene group, an arylene group, an ether group, a carbonyl group, a carboxy group (-COO or -OCO-), a sulfide group, a divalent group formed by linking two or more groups selected from these groups, or the like. L is, for example, a divalent organic group with 1 to 10 carbon atoms. A plurality of Ls, if present, in the general formula (I-1) may be the same or different.

When R^{1a} is not a group containing an epoxy group, R^{1a} is a hydrogen atom or a monovalent substituent. The monovalent substituent may be an alkyl group, an alkoxy group, a cycloalkyl group, an aryl group, an alkenyl group, an alkynyl group, an aryloxy group, an amino group, an alkylamino group, an arylamino group, a cyano group, a nitro group, a silyl group, a halogeno group (for example, a fluoro group), or the like. From the perspective of the availability of raw materials, R^{1a} is preferably a hydrogen atom. When R^{2a} is not a group containing an epoxy group, the specific aspect of R^{2a} is the same as that of R^{1a}.

From the perspective of the availability of raw materials and the ease of synthesis, each of the upper and lower anthracene structures in the general formula (I-1) is preferably substituted by a group containing an epoxy group at position 1, 2, or 9. More specifically, in the general formula (I-1), R^{1a} and R^{2a} within a circle as illustrated below are preferably a group containing an epoxy group. Among these, first three substitution positions are preferred in consideration of steric hindrance during dimerization. Furthermore, from the perspective of further increasing the adhesive strength before disassembly (before second heat treatment), each of the upper and lower anthracene structures in the general formula (I-1) is preferably substituted by a group containing an epoxy group at position 1 or 2, more preferably position 2. The findings of the present inventor show that the dimer in which each of the upper and lower anthracene structures in the general formula (I-1) is substituted by a group containing an epoxy group at position 1 or 2 tends to have a higher decomposition temperature than the dimer in which each of the upper and lower anthracene structures in the general formula (I-1) is substituted by a group containing an epoxy group at position 9. It is presumed that this reduces the decomposition of the anthracene dimer skeleton during bonding of an adherend (first heat treatment) and consequently further increases the adhesive strength.

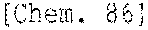

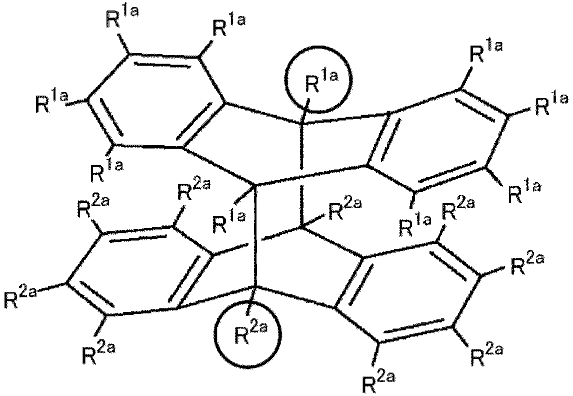

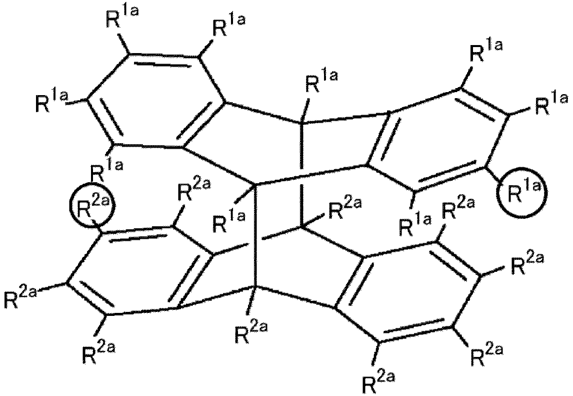

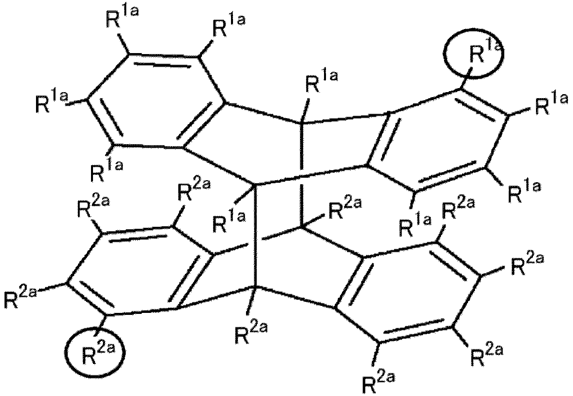

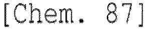

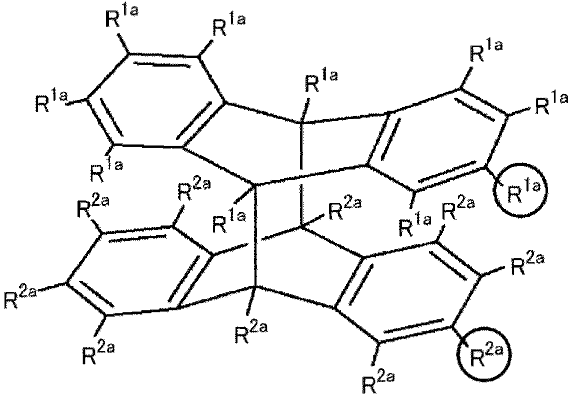

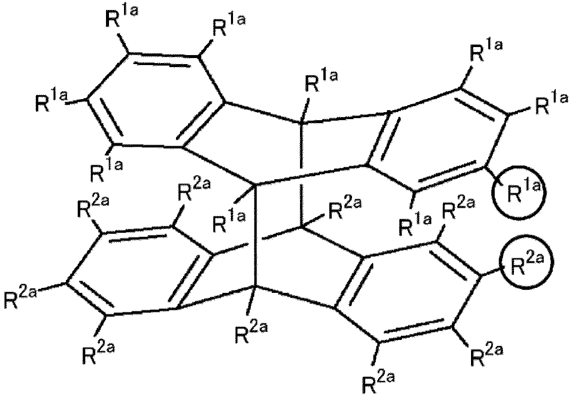

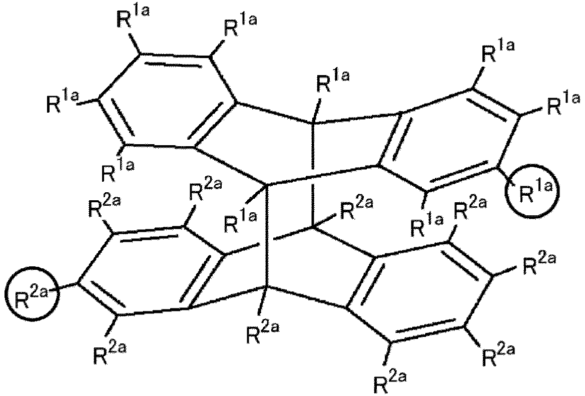

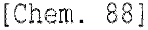

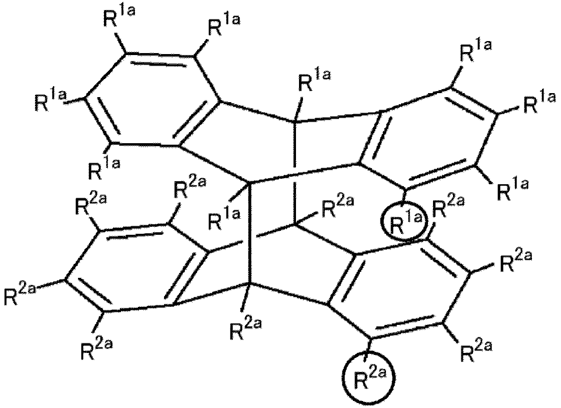

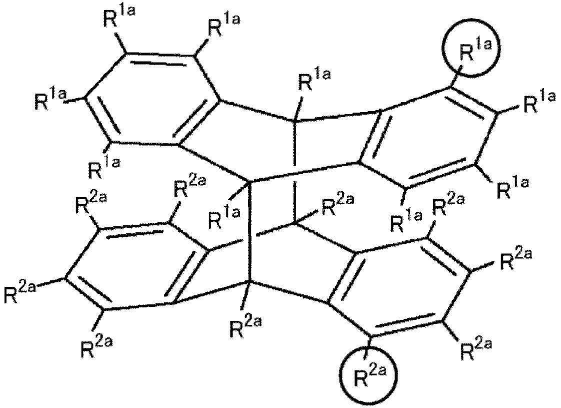

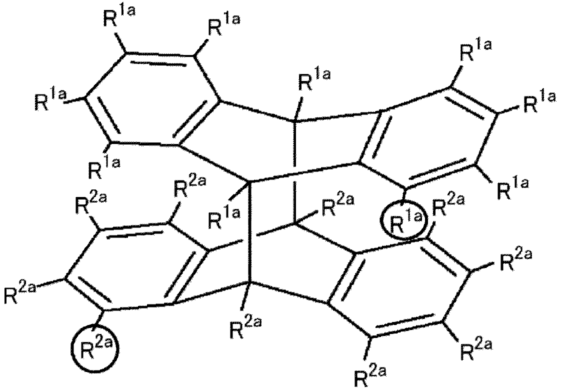

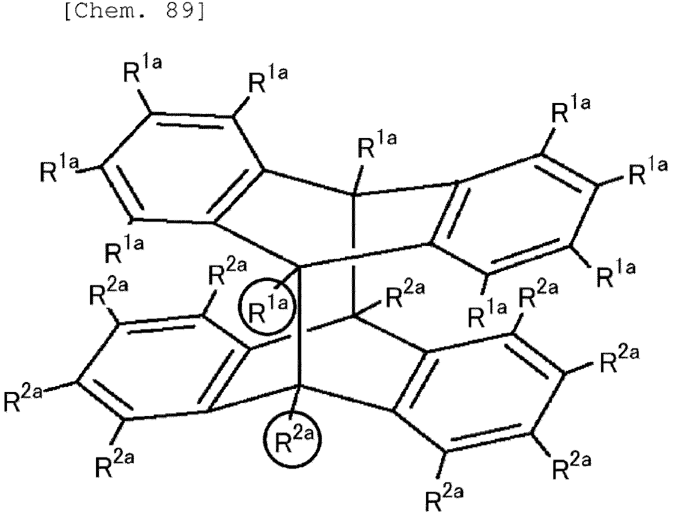

Furthermore, the compound (C-i1) may be a mixture of a plurality of compounds having a group containing an epoxy group at different substitution positions.

Specific examples of the compound (C-i1) include compounds produced by dimerization of the following anthracene monomers by a photochemical reaction.

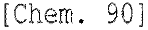

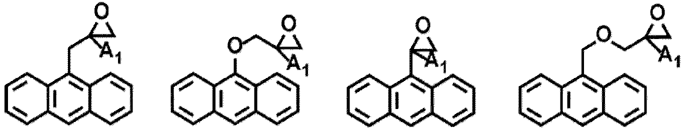

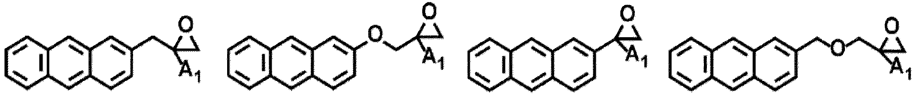

A1 denotes a hydrogen atom or a methyl group.

Specific examples of the compound (C-i1) also include the following compounds described in Japanese Unexamined Patent Application Publication No. 2010-270022 (which is literature related to a high-refractive-index material and is not literature related to easy-to-disassemble adhesion technique).

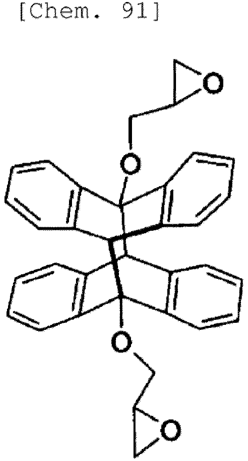

### (Compound (C-i2) with Anthracene Dimer Skeleton)

The compound (C) with the anthracene dimer skeleton is preferably a compound (C-i2) with an anthracene dimer skeleton represented by the following general formula (I-2) (hereinafter sometimes simply referred to as a "compound (C-i2) ") .

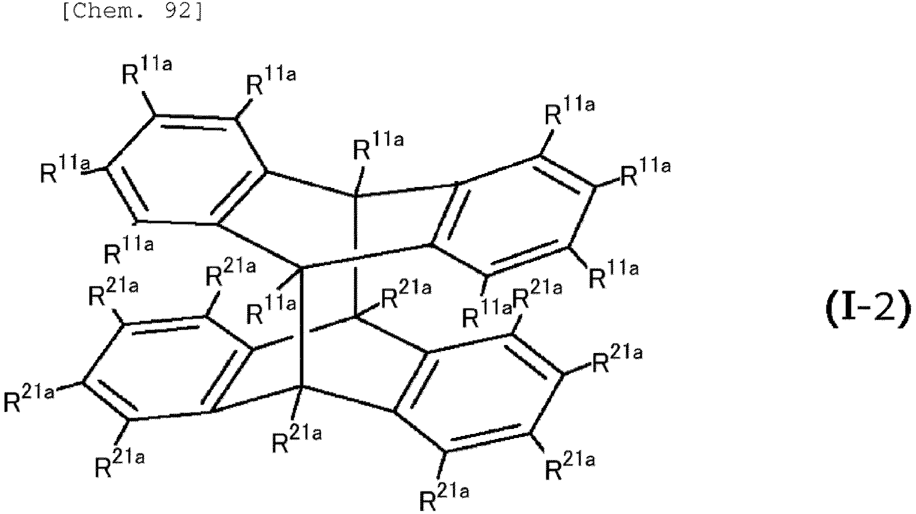

In the general formula (I-2), a plurality of R^{11a}s each independently denote a hydrogen atom or a monovalent substituent, provided that at least one R^{11a} denotes a group containing a curable group, and a plurality of R^{21a}s each independently denote a hydrogen atom or a monovalent substituent, provided that at least one R^{21a} denotes a group containing a curable group. The group containing the curable group is at least one selected from the group consisting of a group containing an amino group, a group containing a hydroxy group, and a group containing a carboxy group.

From the perspective of achieving both adhesiveness and high disassemblability, one to three of R^{11a}s are preferably a group or groups containing a curable group, one or two of R^{11a}s are more preferably a group or groups containing a curable group, and one of R^{11a}s is still more preferably a group containing a curable group. Likewise, one to three of R^{21a}s are preferably a group or groups containing a curable group, one or two of R^{21a}s are more preferably a group or groups containing a curable group, and one of R^{21a}s is still more preferably a group containing a curable group.

The group containing the curable group of R^{11a} and R^{21a} may be a group represented by the general formula -L-Z (L denotes a single bond or a divalent linking group, and Z denotes an amino group, a hydroxy group, or a carboxy group). L may be any divalent linking group. L may be an alkylene group, a cycloalkylene group, an arylene group, an ether group, a carbonyl group, a carboxy group (-COO or -OCO-), a sulfide group, a divalent group formed by linking two or more groups selected from these groups, or the like. L is, for example, a divalent organic group with 1 to 10 carbon atoms. A plurality of Ls, if present, in the general formula (I-2) may be the same or different.

When R^{11a} is not a group containing a curable group, R^{11a} is a hydrogen atom or a monovalent substituent. The monovalent substituent may be an alkyl group, an alkoxy group, a cycloalkyl group, an aryl group, an alkenyl group, an alkynyl group, an aryloxy group, an amino group, an alkylamino group, an arylamino group, a cyano group, a nitro group, a silyl group, a halogeno group (for example, a fluoro group), or the like. From the perspective of the availability of raw materials, R^{11a} is preferably a hydrogen atom. When R^{21a} is not a group containing a curable group, the specific aspect of R^{2a} is the same as that of R^{11a}.

From the perspective of the availability of raw materials and the ease of synthesis, each of the upper and lower anthracene structures in the general formula (I-2) is preferably substituted by a group containing a curable group at position 1, 2, or 9. The specific substitution position is as indicated by the circles in the general formula (I-1) (R^{1a} is read as R^{11a}, and R^{2a} is read as R^{21a}). Furthermore, from the perspective of further increasing the adhesive strength before disassembly (before second heating), each of the upper and lower anthracene structures in the general formula (I-1) is preferably substituted by a group containing a curable group at position 1 or 2, more preferably position 2. The findings of the present inventor show that the dimer in which each of the upper and lower anthracene structures in the general formula (I-1) is substituted by a group containing a curable group at position 1 or 2 tends to have a higher decomposition temperature than the dimer in which each of the upper and lower anthracene structures in the general formula (I-1) is substituted by a group containing a curable group at position 9. It is presumed that this reduces the decomposition of the anthracene dimer skeleton during bonding of an adherend (first heat treatment) and consequently further increases the adhesive strength.

It should be noted that the curing agent (b1) with the anthracene dimer skeleton may be a mixture of a plurality of curing agents having a group containing a curable group at different substitution positions.

Specific examples of the curing agent (b1) with an anthracene dimer skeleton include compounds produced by dimerization of the following anthracene monomers by a photochemical reaction.

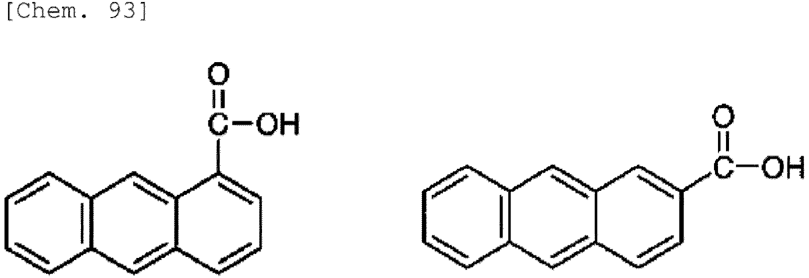

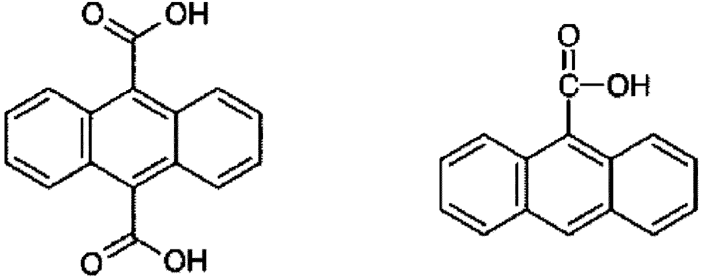

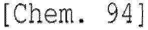

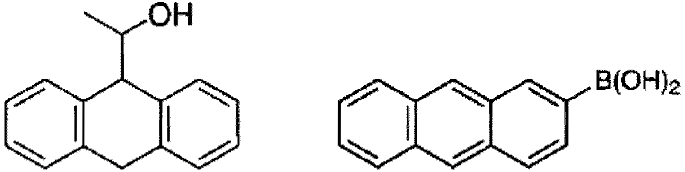

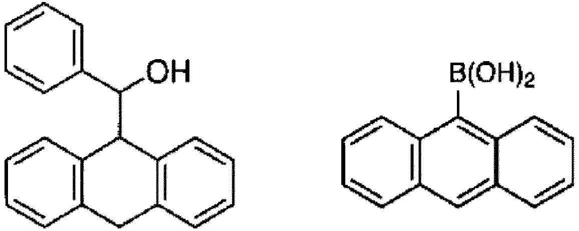

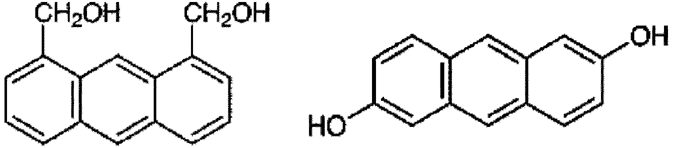

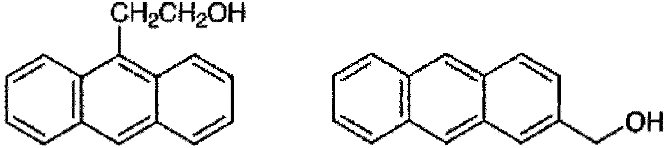

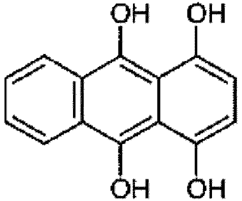

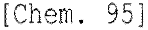

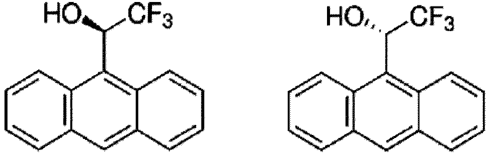

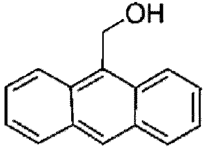

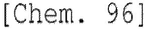

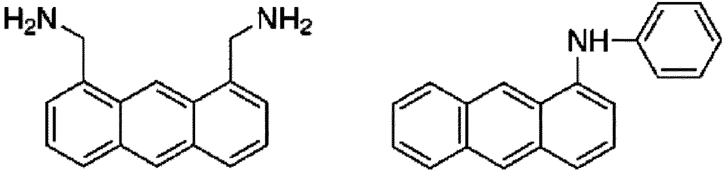

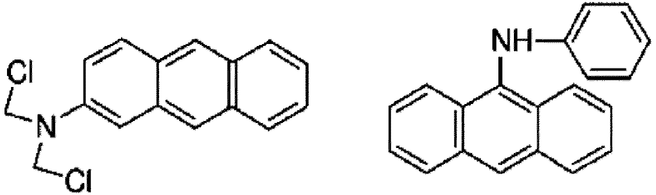

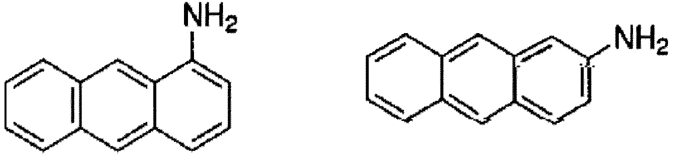

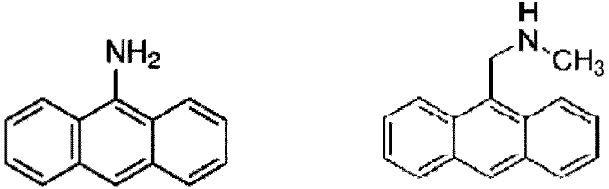

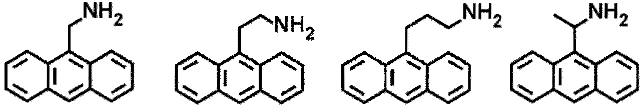

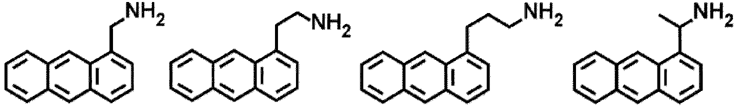

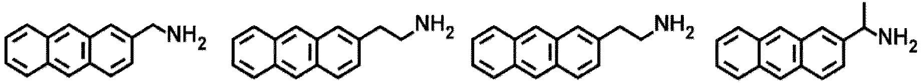

In the following, n denotes, for example, an integer in the range of 6 to 12.

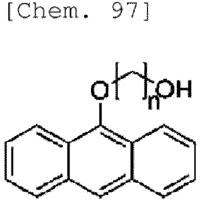

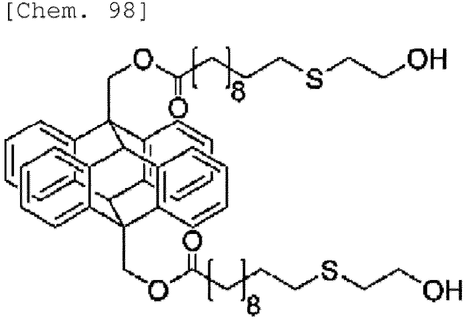

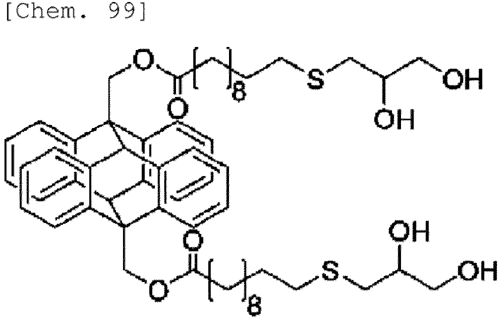

In the epoxy resin composition according to the present embodiment, the amount of the compound (C) preferably ranges from 3 to 40 parts by mass, particularly preferably 5 to 30 parts by mass, per 100 parts by mass of the total of the epoxy resin (A) and the epoxy resin (B) from the perspective of the effect of sufficient expansion to reduce the adhesiveness at the time of disassembly after use without impairing the adhesiveness and the flexibility of the cured product at the time of curing the epoxy resin composition according to the present embodiment.

### [Curing Agent (D)]

The epoxy resin composition according to the present embodiment preferably further contains a curing agent (D) capable of reacting with a common epoxy resin.

The curing agent (D) is, for example, but not limited to, an amine compound, an acid anhydride, an amide compound, a compound with a phenolic hydroxy group, a carboxylic acid compound, a hydroxy compound that is a precursor of the epoxy resin (A), or the like.

The amine compound is, for example, an aliphatic amine compound, such as trimethylenediamine, ethylenediamine, N,N,N',N'-tetramethylethylenediamine, pentamethyldiethylenetriamine, triethylenediamine, dipropylenediamine, N,N,N',N'-tetramethylpropylenediamine, tetramethylenediamine, pentanediamine, hexamethylenediamine, trimethylhexamethylenediamine, N,N,N',N'-tetramethylhexamethylenediamine, N,N-dimethylcyclohexylamine, diethylenetriamine, triethylenetetramine, tetraethylenepentamine, dimethylaminopropylamine, diethylaminopropylamine, dibutylaminopropylamine, 1,4-diazabicyclo(2,2,2)octane (triethylenediamine), polyoxyethylene diamine, polyoxypropylene diamine, bis(2-dimethylaminoethyl)ether, dimethylaminoethoxyethoxyethanol, triethanolamine, dimethylaminohexanol, benzylmethylamine, dimethylbenzylamine, or m-xylenediamine (meta-xylylenediamine);
an alicyclic or heterocyclic amine compound, such as piperidine, piperazine, menthane diamine, isophorone diamine, methylmorpholine, ethylmorpholine, N,N',N"-tris(dimethylaminopropyl)hexahydro-s-triazine, a 3,9-bis(3-aminopropyl)-2,4,8,10-tetraoxyspiro(5,5)undecane adduct, N-aminoethylpiperazine, trimethylaminoethylpiperazine, bis(4-aminocyclohexyl)methane, N,N'-dimethylpiperazine, or 1,8-diazabicyclo-[5.4.0]-undecene (DBU);
an aromatic amine compound, such as o-phenylenediamine, m-phenylenediamine, p-phenylenediamine, diaminodiphenylmethane, diaminodiphenyl sulfone, pyridine, picoline, or α-methylbenzylmethylamine; or
a modified amine compound, such as an epoxy compound addition polyamine, a Michael addition polyamine, a Mannich addition polyamine, a thiourea addition polyamine, a ketone-blocked polyamine, dicyandiamide, guanidine, an organic acid hydrazide, diaminomaleonitrile, aminimide, a boron trifluoride-piperidine complex, a boron trifluoride-monoethylamine complex, or the like.

The acid anhydride may be phthalic anhydride, trimellitic anhydride, pyromellitic dianhydride, maleic anhydride, poly(propylene glycol) maleate anhydride, tetrahydrophthalic anhydride, methyltetrahydrophthalic anhydride, methyl nadic anhydride, hexahydrophthalic anhydride, methylhexahydrophthalic anhydride, or the like.

The compound with the phenolic hydroxy group may be, a polyhydric phenolic compound, such as a bisphenol compound, a phenol novolac resin, a cresol novolac resin, an aromatic hydrocarbon formaldehyde resin modified phenolic resin, a dicyclopentadienephenol addition resin, a phenolaralkyl resin (Xylok resin), a naphthol aralkyl resin, a trimethylolmethane resin, a tetraphenylolethane resin, a naphthol novolac resin, a naphthol-phenol co-condensed novolac resin, a naphthol-cresol co-condensed novolac resin, a biphenyl-modified phenolic resin (a polyhydric phenolic compound with phenolic nuclei linked by a bismethylene group), a biphenyl-modified naphthol resin (a polyhydric naphthol compound with phenolic nuclei linked by a bismethylene group), an aminotriazine-modified phenolic resin (a polyhydric phenolic compound with phenolic nuclei linked by melamine, benzoguanamine, or the like), or an aromatic ring modified novolac resin with an alkoxy group (a polyhydric phenolic compound with a phenolic nucleus and an aromatic ring having an alkoxy group linked by formaldehyde).

The bisphenol compound is, for example, bis(4-hydroxyphenyl)methane (bisphenol F), 2,2-bis(4-hydroxyphenyl)propane (bisphenol A), 2,2-bis(3-methyl-4-hydroxyphenyl)propane, 1,1-bis(4-hydroxyphenyl)cyclohexane, 1,1-bis(4-hydroxyphenyl)-1-phenylethane, bis(4-hydroxyphenyl)sulfone (bisphenol S), or the like.

The amide compound is, for example, dicyandiamide, polyamidoamine, or the like. The polyamidoamine is, for example, one produced by reacting an aliphatic dicarboxylic acid, such as succinic acid, glutaric acid, adipic acid, pimelic acid, suberic acid, or azelaic acid, or a carboxylic acid compound, such as a fatty acid or a dimer acid, with an aliphatic polyamine or a polyamine with a polyoxyalkylene chain.

The carboxylic acid compound may be a carboxylic acid polymer, such as a carboxylic-acid-terminated polyester, poly(acrylic acid), or maleic-acid-modified poly(propylene glycol), or the like.

When these curing agents are used, the curing agents may be used alone or in combination. For example, the amine compound, such as dicyandiamide, may be mixed with the compound with the phenolic hydroxy group, such as bisphenol F. In an application of an underfill material, a general coating material, or the like, the amine compound, the carboxylic acid compound, and/or the acid anhydride compound is preferably used. In an application of an adhesive agent or a flexible circuit board, an amine compound, particularly dicyandiamide, is preferred in terms of workability, curability, and long-term stability. In an application of a semiconductor sealing material, a solid phenolic compound is preferred in terms of the heat resistance of a cured product.

When the compound (C) with the anthracene dimer skeleton in the present embodiment has a group containing a curable group, the curing agent (D) in the present embodiment does not contain the compound (C).

### [Curing Accelerator]

The epoxy resin composition according to the present embodiment may contain a curing accelerator. The curing accelerator may be one of various catalysts, for example, a urea compound, a phosphorus compound, a tertiary amine, imidazole, imidazoline, an organic acid metal salt, a Lewis acid, an amine complex salt, or the like. When used for an adhesive agent, a urea compound, particularly 3-(3,4-dichlorophenyl)-1,1-dimethylurea (DCMU), is preferred in terms of high workability and low-temperature curability. When used for a semiconductor sealing material, in terms of high curability, heat resistance, electrical characteristics, moisture resistance reliability, or the like, triphenylphosphine is preferred as a phosphorus compound, and 1,8-diazabicyclo-[5.4.0]-undecene is preferred as a tertiary amine.

The phosphorus compound is, for example, a first phosphine, such as an alkyl phosphine, such as ethylphosphine or butylphosphine, or phenylphosphine; a dialkyl phosphine, such as dimethyl phosphine or dipropyl phosphine; a second phosphine, such as diphenylphosphine or methylethyl phosphine; a third phosphine, such as trimethylphosphine, triethylphosphine, or triphenylphosphine; or the like.

The tertiary amine may be a tertiary amine, such as triethylamine, N,N-dimethylbenzylamine, N,N-diethylbenzylamine, 1,8-diazabicyclo[5.4.0]undecene, or 1,4-diazabicyclo[2.2.2]octane.

The imidazole is, for example, imidazole, 1-methylimidazole, 2-methylimidazole, 3-methylimidazole, 4-methylimidazole, 5-methylimidazole, 1-ethylimidazole, 2-ethylimidazole, 3-ethylimidazole, 4-ethylimidazole, 5-ethylimidazole, 1-n-propylimidazole, 2-n-propylimidazole, 1-isopropylimidazole, 2-isopropylimidazole, 1-n-butylimidazole, 2-n-butylimidazole, 1-isobutylimidazole, 2-isobutylimidazole, 2-undecyl-1H-imidazole, 2-heptadecyl-1H-imidazole, 1,2-dimethylimidazole, 1,3-dimethylimidazole, 2,4-dimethylimidazole, 2-ethyl-4-methylimidazole, 1-phenylimidazole, 2-phenyl-1H-imidazole, 4-methyl-2-phenyl-1H-imidazole, 2-phenyl-4-methylimidazole, 1-benzyl -2-methylimidazole, 1-benzyl-2-phenylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, a 2-phenylimidazole isocyanuric acid adduct, a 2-methylimidazole isocyanuric acid adduct, 2-phenyl-4,5-di(hydroxymethyl)imidazole, 2-phenyl-4-methyl-5-(hydroxymethyl)imidazole, 1-cyanoethyl-2-phenyl-4,5-di(2-cyanoethoxy)methylimidazole, 1-dodecyl-2-methyl-3-benzyl imidazolium chloride, 1-benzyl-2-phenylimidazole hydrochloride, or the like.

The imidazoline compound is, for example, 2-methylimidazoline, 2-phenylimidazoline, or the like.

The urea compound is, for example, p-chlorophenyl-N,N-dimethylurea, 3-phenyl-1,1-dimethylurea, 3-(3,4-dichlorophenyl)-N,N-dimethylurea, N-(3-chloro-4-methylphenyl)-N',N'-dimethylurea, or the like.

When the compound (C) with the anthracene dimer skeleton in the present embodiment has a function of a curing accelerator, the curing accelerator in the present embodiment also does not contain the compound (C).

### [Other Components]

In the epoxy resin composition according to the present embodiment, in addition to the epoxy resin (A) and the epoxy resin (B), another epoxy resin may be used in combination, provided that the effects of the present embodiment are not impaired. At this time, the total amount of the epoxy resin (A) and the epoxy resin (B) in the epoxy resin composition according to the present embodiment is preferably 30% by mass or more, particularly preferably 40% by mass or more, based on the entire epoxy resin.

The epoxy resin that can be used in combination is any epoxy resin that does not belong to the epoxy resin (A) or the epoxy resin (B), for example, a liquid epoxy resin, such as a bisphenol A epoxy resin, a bisphenol F epoxy resin, a bisphenol S epoxy resin, a bisphenol AD epoxy resin, a polyhydroxybenzene epoxy resin, a polyhydroxynaphthalene epoxy resin, a biphenyl epoxy resin, or a tetramethylbiphenyl epoxy resin; a brominated epoxy resin, such as brominated phenol novolac epoxy resin; a solid bisphenol A epoxy resin, a phenol novolac epoxy resin, a cresol novolac epoxy resin, a triphenylmethane epoxy resin, a tetraphenylethane epoxy resin, a dicyclopentadiene-phenol addition reaction epoxy resin, a phenolaralkyl epoxy resin, a phenylene ether epoxy resin, a naphthylene ether epoxy resin, a naphthol novolac epoxy resin, a naphthol aralkyl epoxy resin, a naphthol-phenol-co-condensed novolac epoxy resin, a naphthol-cresol-co-condensed novolac epoxy resin, an aromatic hydrocarbon formaldehyde resin modified phenolic resin type epoxy resin, or a biphenyl-modified novolac epoxy resin. These may be used alone or in combination and are preferably selected according to the intended use and the physical properties of the cured product.

The amount of the epoxy resin and the curing agent to be used in the epoxy resin composition according to the present embodiment is preferably, but not limited to, such that the active group (curable group) in the curing agent ranges from 0.4 to 2.0 equivalents per total equivalent of epoxy groups in the epoxy resin composition, in terms of the mechanical properties and the like of the resulting cured product.

When the compound (C) in the epoxy resin composition according to the present embodiment has a group containing an epoxy group, for example, when the compound (C) is the compound (C-I1) contained in the epoxy resin composition according to the present embodiment, the amount of the curing agent to be used is preferably such that the active group in the curing agent ranges from 0.4 to 2.0 equivalents per total equivalent of epoxy groups in the epoxy resin composition. The total of epoxy groups in the epoxy resin component is the total of epoxy groups of the epoxy resin A, the epoxy resin B, the compound (C-I1), and another optional epoxy resin in the epoxy resin composition according to the present embodiment.

When the compound (C) in the epoxy resin composition according to the present embodiment has a group containing a curable group, for example, when the compound (C) is the compound (C-I2) contained in the epoxy resin composition according to the present embodiment, the amount of the curing agent to be used is preferably such that the total of the active group in the curing agent and the curable group in the compound (C-I2) ranges from 0.4 to 2.0 equivalents per total equivalent of epoxy groups in the epoxy resin composition.

A reaction between the epoxy group and the curable group produces a new active group, such as a hydroxy group, capable of reacting with the epoxy group or the curable group. Thus, even when either the epoxy group or the curable group in the resin composition is excessive, it reacts with the new active group. This can reduce an unreacted component that leads to performance degradation.

The epoxy resin composition according to the present embodiment may further contain a filler that does not belong to the compound (C). The filler may be an inorganic filler or an organic filler. The inorganic filler is, for example, fine inorganic particles.

The fine inorganic particles are, for example, those with high heat resistance, such as alumina, magnesia, titania, zirconia, or silica (quartz, fumed silica, precipitated silica, silicic anhydride, fused silica, crystalline silica, or ultrafine amorphous silica); those with high thermal conductivity, such as boron nitride, aluminum nitride, aluminum oxide, titanium oxide, magnesium oxide, zinc oxide, silicon oxide, or diamond; those with high electrical conductivity, such as a metal filler and/or a metal-coated filler using a metal element or an alloy (for example, iron, copper, magnesium, aluminum, gold, silver, platinum, zinc, manganese, or stainless steel); those with good barrier properties, including a mineral, such as mica, clay, kaolin, talc, zeolite, wollastonite, or smectite, potassium titanate, magnesium sulfate, sepiolite, xonotlite, aluminum borate, calcium carbonate, titanium oxide, barium sulfate, zinc oxide, or magnesium hydroxide; those with a high refractive index, such as barium titanate, zirconia oxide, or titanium oxide; those with photocatalysis, including a photocatalytic metal, such as titanium, cerium, zinc, copper, aluminum, tin, indium, phosphorus, carbon, sulfur, ruthenium, nickel, iron, cobalt, silver, molybdenum, strontium, chromium, barium, or lead, a complex thereof, or an oxide thereof; those with high wear resistance, including a metal, such as silica, alumina, zirconia, or magnesium oxide, a complex thereof, or an oxide thereof; those with high electrical conductivity, including a metal, such as silver or copper, tin oxide, or indium oxide; those with good insulating properties, such as silica; or those with high ultraviolet shielding, such as titanium oxide or zinc oxide. These fine inorganic particles may be appropriately selected according to the use and may be used alone or in combination. The fine inorganic particles also have various characteristics in addition to the characteristics described above and may be appropriately selected according to the use.

For example, when silica is used as the fine inorganic particles, known fine silica particles, such as powdered silica or colloidal silica, can be used without limitation. Examples of commercially available powdered fine silica particles include Aerosil 50 and 200 manufactured by Nippon Aerosil Co., Ltd., Sildex H31, H32, H51, H52, H121, and H122 manufactured by Asahi Glass Co., Ltd., E220A and E220 manufactured by Nippon Silica Industries Corporation, SYLYSIA 470 manufactured by Fuji Silysia Chemical Ltd., and SG flakes manufactured by Nippon Sheet Glass Co., Ltd.

Examples of commercially available colloidal silica include methanol silica sol, IPA-ST, MEK-ST, NBA-ST, XBA-ST, DMAC-ST, ST-UP, ST-OUP, ST-20, ST-40, ST-C, ST-N, ST-O, ST-50, and ST-OL manufactured by Nissan Chemical Industries, Ltd.

Surface-modified fine silica particles may also be used, and examples thereof include the fine silica particles surface-treated with a reactive silane coupling agent having a hydrophobic group and the fine silica particles modified with a compound having a (meth)acryloyl group. Examples of commercially available powdered silica modified with a compound having a (meth)acryloyl group include Aerosil RM50 and R₇11 manufactured by Nippon Aerosil Co., Ltd., and examples of commercially available colloidal silica modified with a compound having a (meth)acryloyl group include MIBK-SD manufactured by Nissan Chemical Industries, Ltd.

The fine silica particles may have any shape, such as spherical, hollow, porous, rod-like, plate-like, fibrous, or irregular-shaped. The primary particle size preferably ranges from 5 to 200 nm.

The fine titanium oxide particles may be not only an extender pigment but also an ultraviolet responsive photocatalyst, for example, anatase titanium oxide, rutile titanium oxide, brookite titanium oxide, or the like. Furthermore, particles designed to respond to visible light by doping the crystal structure of titanium oxide with a different element can also be used. The element with which titanium oxide is doped is preferably an anion element, such as nitrogen, sulfur, carbon, fluorine, or phosphorus, or a cation element, such as chromium, iron, cobalt, or manganese. Furthermore, as the form, a powder, or a sol or slurry dispersed in an organic solvent or water can be used. Examples of commercially available powdered fine titanium oxide particles include Aerosil P₂5 manufactured by Nippon Aerosil Co., Ltd. and ATM₁00 manufactured by Tayca Corporation. Examples of commercially available slurry fine titanium oxide particles include TKD-701 manufactured by Tayca Corporation.

The epoxy resin composition according to the present embodiment may further contain a fibrous substrate. The fibrous substrate is preferably, but not limited to, one used for a fiber-reinforced resin, such as inorganic fiber or organic fiber.

The inorganic fiber may be inorganic fiber, such as carbon fiber, glass fiber, boron fiber, alumina fiber, or silicon carbide fiber, or carbon fiber, activated carbon fiber, graphite fiber, tungsten carbide fiber, silicon carbide fiber, ceramic fiber, natural fiber, mineral fiber, such as basalt, boron nitride fiber, boron carbide fiber, metal fiber, or the like. The metal fiber is, for example, aluminum fiber, copper fiber, brass fiber, stainless steel fiber, or steel fiber.

The organic fiber may be synthetic fiber made of a resin material, such as polybenzazole, aramid, poly(p-phenylene)benzoxazole (PBO), poly(phenylene sulfide), a polyester, an acryl, a polyamide, a polyolefin, poly(vinyl alcohol), or a polyarylate; natural fiber, such as cellulose, pulp, cotton, wool, or silk; or regenerated fiber, such as a protein, a polypeptide, or alginic acid.

Among them, carbon fiber and glass fiber are preferred because of their wide industrial applicability. These may be used alone or in combination.

The fibrous substrate may be a fiber assembly, continuous or discontinuous fiber, or a woven fabric or a non-woven fabric. It may also be a fiber bundle of fibers aligned in one direction or a sheet of arranged fiber bundles. It may also be a thick fiber assembly with a three-dimensional shape.

### [Dispersion Medium]

The epoxy resin composition according to the present embodiment may contain a dispersion medium to adjust the solid content and viscosity of the resin composition. The dispersion medium may be any liquid medium that does not impair the advantages of the present invention, for example, an organic solvent, a liquid organic polymer, or the like.

The organic solvent is, for example, a ketone, such as acetone, methyl ethyl ketone (MEK), or methyl isobutyl ketone (MIBK), a cyclic ether, such as tetrahydrofuran (THF) or dioxolane, an ester, such as methyl acetate, ethyl acetate, or butyl acetate, an aromatic, such as toluene or xylene, an alcohol, such as carbitol, cellosolve, methanol, isopropanol, butanol, or propylene glycol monomethyl ether. These may be used alone or in combination. Among them, methyl ethyl ketone is preferred in terms of volatility and solvent recovery during application.

The liquid organic polymer is a liquid organic polymer that does not directly contribute to a curing reaction, for example, a modified product of a polymer with a carboxy group (Flowlen G-900, NC-500: Kyoeisha Chemical Co., Ltd.), an acrylic polymer (Flowlen WK-20: Kyoeisha Chemical Co., Ltd.), an amine salt of a specially modified phosphate (HIPLAAD ED-251: Kusumoto Chemicals, Ltd.), a modified acrylic block copolymer (DISPERBYK 2000; BYK-Chemie), or the like.

### [Another Resin]

The resin composition according to the present embodiment may contain a resin other than the various compounds of the present embodiment. The resin may be a traditional resin, for example, a thermosetting resin or a thermoplastic resin, provided that the effects of the present embodiment are not impaired

The thermosetting resin is a resin that can be changed to be substantially insoluble and infusible when cured by means of heating, radiation, a catalyst, or the like. Specific examples thereof include phenolic resins, urea resins, melamine resins, benzoguanamine resins, alkyd resins, unsaturated polyester resins, vinyl ester resins, diallyl terephthalate resins, silicone resins, urethane resins, furan resins, ketone resins, xylene resins, thermosetting polyimide resins, benzoxazine resins, active ester resins, aniline resins, cyanate ester resins, styrene-maleic anhydride (SMA) resins, and maleimide resins. These thermosetting resin may be used alone or in combination.

The thermoplastic resin refers to a resin that is melt-formable by heating. Specific examples thereof include polyethylene resins, polypropylene resins, polystyrene resins, rubber-modified polystyrene resins, acrylonitrile-butadiene-styrene (ABS) resins, acrylonitrile-styrene (AS) resins, poly(methyl methacrylate) resins, acrylic resins, poly(vinyl chloride) resins, poly(vinylidene chloride) resins, poly(ethylene terephthalate) resins, ethylene vinyl alcohol resins, cellulose acetate resins, ionomer resins, polyacrylonitrile resins, polyamide resins, polyacetal resins, poly(butylene terephthalate) resins, poly(lactic acid) resins, poly(phenylene ether) resins, modified poly(phenylene ether) resins, polycarbonate resins, polysulfone resins, poly(phenylene sulfide) resins, poly(ether imide) resins, poly(ether sulfone) resins, polyarylate resins, thermoplastic polyimide resins, polyamideimide resins, poly(ether ether ketone) resins, polyketone resins, liquid crystal polyester resins, fluoropolymers, syndiotactic polystyrene resins, and cyclic polyolefin resins. These thermoplastic resins may be used alone or in combination.

### [Other Components]

The resin composition according to the present embodiment may contain another component. Examples thereof include a catalyst, a polymerization initiator, an inorganic pigment, an organic pigment, an extender pigment, a clay mineral, a wax, a surfactant, a stabilizer, a flow modifier, a coupling agent, a dye, a leveling agent, a rheology control agent, an ultraviolet absorber, an antioxidant, a flame retardant, a plasticizer, and a reactive diluent.

### [Method for Curing Epoxy Resin Composition]

The resin composition according to the present embodiment can be cured to form a cured product. For curing, curing may be performed at normal temperature or by heating. For heat curing, curing may be performed by heating once or through a multi-stage heating process.

The epoxy resin composition according to the present embodiment is preferably cured at a temperature lower than the initial dissociation temperature of the anthracene dimer skeleton in the epoxy resin composition.

The epoxy resin composition according to the present embodiment is more preferably cured at a temperature lower by 20°C than the initial dissociation temperature of the anthracene dimer skeleton. The temperature is still more preferably lower by 30°C than the initial dissociation temperature of the anthracene dimer skeleton.

The behavior of the initial dissociation temperature of the anthracene dimer skeleton can be estimated, for example, by heating a substituted anthracene dimer compound or a solution thereof at a predetermined temperature and quantifying the amount of substituted anthracene monomer compound produced by thermal dissociation with an analyzer, such as NMR, GPC, or gas chromatography.

An epoxy resin composition according to the present invention can also be cured with an active energy beam. In this case, a cationic photoinitiator may be used as a polymerization initiator. The active energy beam may be visible light, ultraviolet light, X-rays, an electron beam, or the like.

The cationic photoinitiator may be an aryl-sulfonium salt, an aryl-iodonium salt, or the like, more specifically, arylsulfonium hexafluorophosphate, arylsulfonium hexafluoroantimonate, arylsulfonium tetrakis(pentafluoro)borate, tri(alkylphenyl)sulfonium hexafluorophosphate, or the like. The cationic photoinitiator may be used alone or in combination.

### [Method for Preparing Epoxy Resin Composition]

The epoxy resin composition according to the present embodiment may be prepared by homogeneously mixing the components by any method. For example, it can be prepared by homogeneous mixing using a pot mill, a ball mill, a bead mill, a rolling mill, a homogenizer, a super mill, a Homo Disper agitator, a universal mixer, a Banbury mixer, a kneader, or the like.

### [Cured Product]

A cured product of the present embodiment is formed by curing the epoxy resin composition, and the curing conditions can be selected according to the type of curing agent or curing accelerator, or the like. The curing conditions are the same as those for known epoxy resin compositions, and no special method is required. The cured product can be stacked on a substrate to form a laminate. The substrate of the laminate may be appropriately used depending on the application, for example, an inorganic material, such as a metal or glass, an organic material, such as a plastic or wood, or the like. The shape of the laminate may be a flat sheet, sheet-like, a three-dimensional structure, or a solid body. The shape may be any shape according to the purpose, such as a shape with a curvature over the entire surface or on a portion thereof. The substrate may have any hardness, thickness, or the like. Furthermore, the cured product of the present embodiment may be used as a substrate, and the cured product of the present embodiment may be further stacked thereon.

The cured product of the epoxy resin composition according to the present embodiment preferably has a sea-island structure composed of a sea portion and an island portion, and the sea portion preferably has an average particle size in the range of 10 nm to 100 µm.

A first substrate, a layer formed of a cured product of a resin composition, and a second substrate may be stacked in this order to form a multilayer laminate. The resin composition according to the present embodiment has high adhesiveness and can be suitably used as an adhesive agent for bonding the first substrate and the second substrate.

The resin composition according to the present embodiment has particularly high adhesiveness to a metal and/or a metal oxide and can be particularly favorably used as a primer for a metal. The metal may be copper, aluminum, gold, silver, iron, platinum, chromium, nickel, tin, titanium, zinc, an alloy, or a composite material thereof, and the metal oxide may be a single oxide and/or a composite oxide of the metal. In particular, it has high adhesive strength to iron, copper, or aluminum, and can be suitably used for an adhesive agent for iron, copper, or aluminum.

The resin composition according to the present embodiment can relieve stress and can be particularly preferably used for bonding of different materials. For example, even for a laminate of different materials in which the first substrate is a metal and/or a metal oxide and the second substrate is a plastic layer, adhesive strength is maintained due to the stress relaxation ability of the resin composition.

In the laminate of the present embodiment, the layer formed of the cured product may be formed by direct coating or forming on the substrate or may be formed in advance and then stacked. For direct coating, the coating method may be, but is not limited to, a spray method, a spin coating method, a dipping method, a roll coating method, a blade coating method, a doctor roll method, a doctor blade method, a curtain coating method, a slit coating method, a screen printing method, an ink jet method, or the like. The direct forming may be in-mold forming, insert molding, vacuum forming, extrusion lamination molding, press forming, or the like.

When a formed resin composition is stacked, an uncured or semi-cured resin composition layer may be stacked and then cured, or a layer of a cured product produced by completely curing the composition may be stacked on a substrate.

A precursor that can serve as a substrate may be applied to the cured product of the present embodiment and cured for lamination, or a precursor that can serve as a substrate or the composition of the present embodiment may be bonded in an uncured or semi-cured state to the cured product of the present embodiment and then cured. The precursor that can serve as a substrate may be, but is not limited to, a curable resin composition or the like.

When the resin composition according to the present embodiment has a fibrous substrate, and the fibrous substrate is a reinforcing fiber, the composition containing the fibrous substrate can be used as a fiber-reinforced resin.

Provided that the effects of the present embodiment are not impaired, the fibrous substrate may be incorporated into the composition by any method, for example, a method of combining the fibrous substrate and the composition by kneading, coating, impregnation, injection, pressure bonding, or the like, and the method can be appropriately selected according to the form of the fiber and the use of the fiber-reinforced resin.

The fiber-reinforced resin of the present embodiment can be formed by any method. A plate-like product is typically produced by an extrusion method and can also be produced by flat pressing. It is also possible to use an extrusion method, a blow molding method, a compression molding method, a vacuum forming method, an injection molding method, or the like. A film-like product may be produced by a melt extrusion method or a solution casting method. When a melt forming method is used, inflation film forming, cast forming, extrusion lamination forming, calendering, sheet forming, fiber forming, blow molding, injection molding, rotational molding, coating, or the like can be mentioned. When a resin is cured using an active energy beam, a cured product can be produced by a curing method using the active energy beam. In particular, when a thermosetting resin is used as a main component of a matrix resin, a forming method of producing a prepreg of a forming material and pressing and heating the prepreg using a press or an autoclave is exemplified. In addition to this, resin transfer molding (RTM), vacuum assist resin transfer molding (VaRTM), laminate molding, hand lay-up molding, or the like is exemplified.

The fiber-reinforced resin of the present embodiment can form a state called an uncured or semi-cured prepreg. A cured product may be formed by distributing a product in a prepreg state and then performing final curing. A laminate is preferably formed by forming a prepreg, then stacking another layer, and performing final curing, because the layers of a laminate thus formed can be in close contact with each other.

The mass ratio of a composition to a fibrous substrate used at this time is not particularly limited, but it is usually preferable to prepare such that the resin content of the prepreg ranges from 20% to 60% by mass.

A cured product of the resin composition according to the present embodiment has high adhesiveness to a substrate, and the resin composition can be suitably used particularly for an electronic member. In particular, it can be suitably used for a semiconductor sealant, a circuit board, a build-up film, a build-up substrate, an adhesive agent, or a resist material. Furthermore, it can also be suitably used for a matrix resin of a fiber-reinforced resin and is particularly suitable for a prepreg with high heat resistance. An electronic member thus produced can be suitably used for various applications, for example, but not limited to, industrial machinery parts, general mechanical parts, parts for automobiles, railroads, vehicles, and the like, parts related to space and aviation, electronic and electrical parts, building materials, containers and packaging members, consumer goods, sports and recreational equipment, and housing members for wind power generation, and the like.

In particular, taking advantage of a cured product with high flexibility, it can be suitably used as an adhesive agent for structural members in the fields of automobiles, trains, civil engineering and construction, electronics, aircraft, and space industry. The adhesive agent of the present embodiment can maintain high adhesiveness without being affected by a change in temperature environment and is less likely to cause peeling or the like even when used for bonding of different materials, for example, between a metal and a non-metal. Furthermore, the adhesive agent of the present embodiment can be used as an adhesive agent for a structural member application, general office use, medical use, carbon fiber, a cell, module, case, or the like of a storage battery, and may be an adhesive agent for bonding an optical component, an adhesive agent for bonding an optical disk, an adhesive agent for mounting a printed wiring board, an adhesive agent for a semiconductor, such as a die-bonding adhesive agent or an underfill, an adhesive agent for mounting, such as an underfill for BGA reinforcement, an anisotropic electrically conductive film, or an anisotropic electrically conductive paste, or the like.

Typical products are described below by way of example.

### [1] Semiconductor Sealing Material

A semiconductor sealing material may be produced from a resin composition according to the present invention by a method of sufficiently melt-mixing the resin composition and compounding components, such as a curing accelerator and an inorganic filler, until they become uniform, if necessary, using an extruder, a kneader, a roll, or the like. In this case, the inorganic filler is typically fused silica and, when used as a highly thermally conductive semiconductor sealant for a power transistor or a power IC, may be highly filled crystalline silica, alumina, silicon nitride, or the like with higher thermal conductivity than fused silica, or may be fused silica, crystalline silica, alumina, silicon nitride, or the like. The filling rate of the inorganic filler preferably ranges from 30% to 95% by mass per 100 parts by mass of a curable resin composition. In particular, to improve flame retardancy, moisture resistance, and solder crack resistance and to reduce the linear expansion coefficient, the filling rate is more preferably 70 parts by mass or more, still more preferably 80 parts by mass or more.

### [2] Semiconductor Device

A semiconductor device may be produced from a curable resin composition of the present invention by semiconductor package forming of casting the semiconductor sealing material or molding the semiconductor sealing material with a transfer molding machine, an injection molding machine, or the like, and then heating the semiconductor sealing material at 50°C to 250°C for 2 to 10 hours.

### [3] Printed Circuit Board

A printed circuit board may be produced from a composition according to the present invention by a method of stacking the prepreg in the usual manner, appropriately putting a copper foil thereon, and performing thermocompression bonding at a pressure in the range of 1 to 10 MPa at 170°C to 300°C for 10 minutes to 3 hours.

### [4] Build-Up Substrate

A build-up substrate may be produced from a composition according to the present invention, for example, by a method including the following steps. First, a step of applying the composition containing a rubber, a filler, and the like appropriately blended to a circuit board, on which a circuit is formed, by a spray coating method, a curtain coating method, or the like, and then curing the composition (step 1). Subsequently, a step of forming a predetermined hole, such as a through-hole portion, as required, then treating with a roughening agent, washing the surface with hot water to form irregularities, and plating with a metal, such as copper (step 2). A step of sequentially repeating such an operation if desired and alternately building up an insulating resin layer and a conductor layer with a predetermined circuit pattern (step 3). The through-hole portion is bored after the outermost insulating resin layer is formed. The build-up substrate of the present invention can also be produced by thermocompression bonding of a resin-coated copper foil, which is produced by semi-curing the resin composition on a copper foil, at 170°C to 300°C onto a circuit board with a circuit formed thereon, thereby forming a roughened surface and omitting the step of plating treatment.

### [5] Build-Up Film

A build-up film can be produced from a composition according to the present invention by a method of applying the composition to the surface of a support film (Y) substrate and drying an organic solvent by heating, blowing hot air, or the like to form a layer (X) of the composition.

The organic solvent used herein is preferably, for example, a ketone, such as acetone, methyl ethyl ketone, or cyclohexanone, an acetate, such as ethyl acetate, butyl acetate, cellosolve acetate, propylene glycol monomethyl ether acetate, or carbitol acetate, a carbitol, such as cellosolve or butyl carbitol, an aromatic hydrocarbon, such as toluene or xylene, dimethylformamide, dimethylacetamide, N-methylpyrrolidone, or the like, and is preferably used at a non-volatile content in the range of 30% to 60% by mass.

The layer (X) to be formed typically has a thickness equal to or higher than the thickness of a conductor layer. A conductor layer of a circuit board typically has a thickness in the range of 5 to 70 um, and a resin composition layer therefore preferably has a thickness in the range of 10 to 100 µm. The layer (X) of the composition in the present invention may be protected with a protective film described later. Protection with the protective film can prevent adhesion of dust or the like and scratches on the surface of the resin composition layer.

The support film and the protective film may be a polyolefin, such as polyethylene, polypropylene, or poly(vinyl chloride), a polyester, such as poly(ethylene terephthalate) (hereinafter sometimes abbreviated as "PET") or poly(ethylene naphthalate), a polycarbonate, a polyimide, release paper, metal foil, such as copper foil or aluminum foil, or the like. The support film and the protective film may be subjected to mat treatment, corona treatment, or release treatment. The thickness of the support film is typically, but not limited to, in the range of 10 to 150 um, preferably 25 to 50 µm. The protective film preferably has a thickness in the range of 1 to 40 µm.

The support film (Y) is peeled off after lamination on a circuit board or after formation of an insulating layer by heat curing. Peeling off the support film (Y) after heat curing of a curable resin composition layer constituting the build-up film can prevent adhesion of dust or the like in the curing step. For peeling off after curing, the support film is usually treated to be releasable in advance.

A multilayer printed circuit board can be produced using the build-up film produced as described above. For example, when the layer (X) is protected with a protective film, the protective film is peeled off, and the layer (X) is then laminated on one or both sides of a circuit board so as to be in direct contact with the circuit board, for example, by a vacuum lamination method. The lamination method may be a batch method or a continuous method using a roll. If necessary, the build-up film and the circuit board may be heated (preheated) before lamination. As the lamination conditions, the pressure-bonding temperature (lamination temperature) preferably ranges from 70°C to 140°C, the pressure-bonding pressure preferably ranges from 1 to 11 kgf/cm₂ (9.8 x 10⁴ to 107.9 x 10⁴ N/m₂), and the lamination is preferably performed under a reduced air pressure of 20 mmHg (26.7 hPa) or less.

### [6] Electrically Conductive Paste

An electrically conductive paste may be produced from a composition according to the present invention by a method of dispersing electrically conductive particles in the composition. The electrically conductive paste can be a paste resin composition for circuit connection or an anisotropic electrically conductive adhesive agent depending on the type of electrically conductive particles used.

### EXAMPLES

Next, the present invention is more specifically described with reference to Examples and Comparative Examples. In the following description, "part(s)" and "%" are on a mass basis unless otherwise specified. The present invention is not limited thereto.

¹H-NMR, FD-MS spectrum, and GPC were measured under the following conditions.

### <¹H-NMR>

¹H-NMR: "JNM-ECA600" manufactured by JEOL RESONANCE
Magnetic field strength: 600 MHz
Number of scans: 32
Solvent: DMSO-d₆
Sample concentration: 30% by mass

### <FD-MS Spectrum>

FD-MS: "JMS-T100GC AccuTOF" manufactured by JEOL Ltd.
Measurement range: m/z = 50.00 to 2000.00
Rate of change: 25.6 mA/min
Final current value: 40 mA
Cathode voltage: -10 kV

### <GPC>

GPC: "HLC-8320GPC" manufactured by Tosoh Corporation
Column: "TSK-GEL G2000HXL" + "TSK-GEL G3000HXL" + "TSK-GEL G4000HXL" manufactured by Tosoh Corporation
Detector: differential refractometer (RI)
Measurement conditions: 40°C
Mobile phase: tetrahydrofuran
Flow rate: 1 ml/min
Standards: "PStQuick A", "PStQuick B", "PStQuick E", and "PStQuick F" manufactured by Tosoh Corporation

### <Epoxy Equivalent>

The epoxy equivalent of a synthesized epoxy resin was measured in accordance with JIS K7236 to calculate the epoxy equivalent (g/eq).

### <Number of Repeating Units>

The number of repeating units is calculated, for example, from the results of various appropriate instrumental analyses, such as GPC molecular weight measurement, FD-MS, and NMR.

### (Synthesis Example 1)

A flask equipped with a thermometer and a stirrer was charged with 210 g (0.5 mol) of diglycidyl ether of 1,12-dodecanediol (manufactured by Yokkaichi Chemical Co., Ltd., epoxy equivalent: 210 g/eq) and 119.7 g (0.53 mol) of bisphenol A (hydroxy equivalent: 114 g/eq), was heated to 140°C over 30 minutes, and was then charged with 3.2 g of 20% aqueous sodium hydroxide. The mixture was then heated to 150°C over 30 minutes and was further reacted at 150°C for 16 hours. A neutralizing amount of sodium phosphate was then added, and 320 g of a hydroxy compound (Ph-1) was produced. The hydroxy compound (Ph-1) had a peak of M+ = 771 in a mass spectrum, which corresponds to a theoretical structure represented by the following structural formula (Ph-1) wherein m₁ = 1 and n₁ = 12. Thus, it was confirmed that the target hydroxy compound was contained. The hydroxy compound (Ph-1) had a hydroxy equivalent of 2000 g/eq as calculated from GPC.

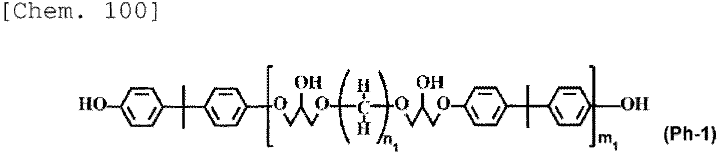

### (Synthesis Example 2)

320 g of a hydroxy compound (Ph-2) was produced by the same reaction as in Synthesis Example 1 except that 210 g (0.5 mol) of diglycidyl ether of 1,12-dodecanediol (epoxy equivalent: 210 g/eq) in Synthesis Example 1 was changed to 136 g (0.43 mol) of diglycidyl ether of 1,6-hexanediol ("SR-16H" manufactured by Sakamoto Yakuhin Kogyo Co., Ltd., epoxy equivalent: 160 g/eq) and 66 g (0.07 mol) of diglycidyl ether of poly(tetramethylene glycol) ("Denacol EX-991L" manufactured by Nagase ChemteX Corporation, epoxy equivalent: 445 g/eq). The hydroxy compound (Ph-2) had a peak of M+ = 1839 in a mass spectrum, which corresponds to a theoretical structure represented by the following structural formula (Ph-2) wherein n₁ = 6, m₁ = 1, n₂ = 11, and m₂ = 1. Thus, it was confirmed that the target hydroxy compound was contained. The hydroxy compound (Ph-2) had a hydroxy equivalent of 1896 g/eq as calculated from GPC.

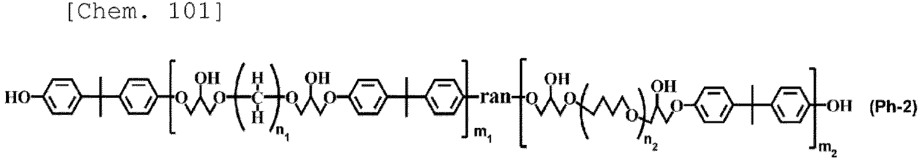

### (Synthesis Example 3)

590 g of a hydroxy compound (Ph-3) was produced by the same reaction as in Synthesis Example 1 except that 210 g (0.5 mol) of diglycidyl ether of 1,12-dodecanediol (epoxy equivalent: 210 g/eq) in Synthesis Example 1 was changed to 481 g (0.5 mol) of diglycidyl ether of poly(propylene glycol) ("Denacol EX-931" manufactured by Nagase ChemteX Corporation, epoxy equivalent: 481 g/eq). The hydroxy compound (Ph-3) had a peak of M+ = 1226 in a mass spectrum, which corresponds to a theoretical structure represented by the following structural formula (Ph-3) wherein m = 1 and n = 11. Thus, it was confirmed that the target hydroxy compound was contained. The hydroxy compound (Ph-3) had a hydroxy equivalent of 593 g/eq as calculated from GPC, and the average value of the repeating unit m was 0.8.

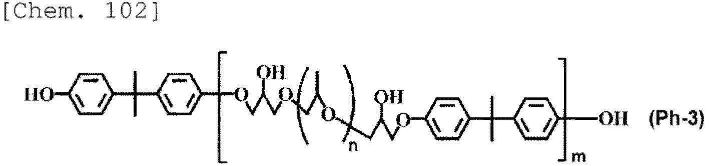

### (Synthesis Example 4)

In a flask equipped with a thermometer, a dropping funnel, a cooling tube, and a stirrer, 200 g of the hydroxy compound (Ph-1) produced in Synthesis Example 1, 437 g (4.72 mol) of epichlorohydrin, and 118 g of n-butanol were charged and dissolved while purging with nitrogen gas. After heating to 65°C and evacuation to an azeotropic pressure, 6.66 g (0.08 mol) of 49% aqueous sodium hydroxide was added dropwise over 5 hours. Stirring was then continued for 0.5 hours under the same conditions. During this time, the distillate distilled off by azeotropy was separated with a Dean-Stark trap, the aqueous layer was removed, and the reaction was performed while returning the oil layer to the reaction system. Unreacted epichlorohydrin was then distilled off by vacuum distillation. The crude epoxy resin thus produced was dissolved in 150 g of methyl isobutyl ketone and 150 g of n-butanol. Furthermore, 10 g of 10% aqueous sodium hydroxide was added to the solution. After the reaction at 80°C for 2 hours, washing with 50 g of water was repeated three times until the washing water had neutral pH. The system was then dehydrated by azeotropy and was subjected to microfiltration, and the solvent was then distilled off under reduced pressure. Thus, 190 g of an epoxy resin (Ep-1) was prepared. The epoxy resin Ep-1 had an epoxy equivalent of 2320 g/eq. The epoxy resin (Ep-1) had a peak of M+ = 883 in a mass spectrum, which corresponds to a theoretical structure represented by the following structural formula (Ep-1) wherein m₁ = 1, n₁ = 12, p₁ = 0, p₂ = 0, and q = 1. Thus, it was confirmed that the target epoxy resin (Ep-1) was contained.

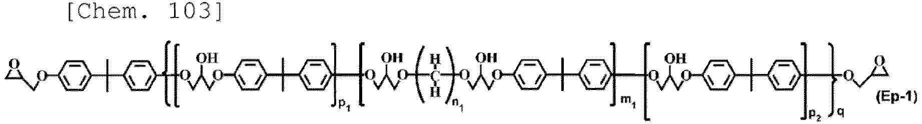

### (Synthesis Example 5)

190 g of an epoxy resin (Ep-2) was produced by the same reaction as in Synthesis Example 3 except that 200 g of the hydroxy compound (Ph-1) produced in Synthesis Example 1 was changed to 200 g of the hydroxy compound (Ph-2) produced in Synthesis Example 2. The epoxy resin (Ep-2) had an epoxy equivalent of 2167 g/eq. The epoxy resin (Ep-2) had a peak of M+ = 1951 in a mass spectrum, which corresponds to a theoretical structure represented by the following structural formula (Ep-2) wherein m₁ = 1, n₁ = 6, m₂ = 1, n₂ = 11, q = 1, p₁ = 0, and p₂ = 0. Thus, it was confirmed that the epoxy resin (Ep-2) with a target structure was contained.

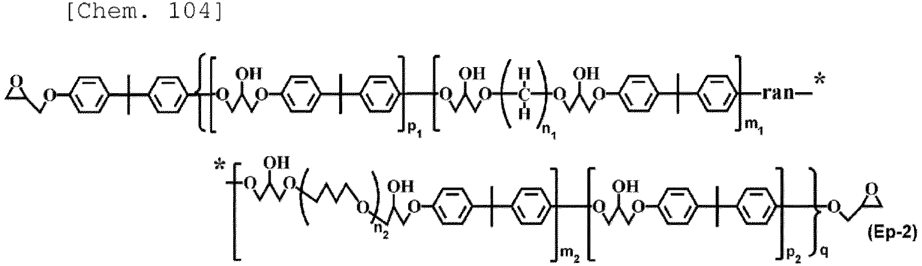

### (Synthesis Example 6)

191 g of an epoxy resin (Ep-3) was produced by the same reaction as in Synthesis Example 3 except that 200 g of the hydroxy compound (Ph-1) produced in Synthesis Example 1 was changed to 200 g of the hydroxy compound (Ph-3) produced in Synthesis Example 3. The epoxy resin (Ep-3) had an epoxy equivalent of 2167 g/eq. The epoxy resin (Ep-2) had a peak of M+ = 1492 in a mass spectrum, which corresponds to a theoretical structure represented by the following structural formula (Ep-3) wherein m = 1, n = 11, q = 1, p₁ = 0, and p₂ = 0. Thus, it was confirmed that the epoxy resin (Ep-3) with a target structure was contained.

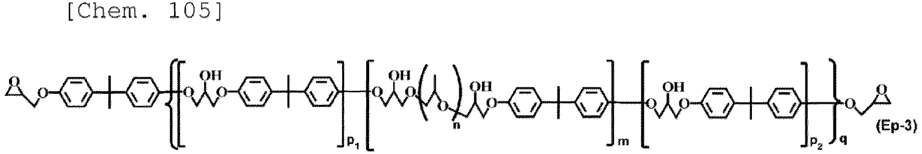

### (Synthesis Example 7)

In accordance with a report (Chemistry Letters (2009), 38, (7), 726-727), a 2-anthracenecarboxylic acid dimer (hereinafter also referred to as a 2-AC dimer) with the following structure was synthesized using a photochemical reaction.

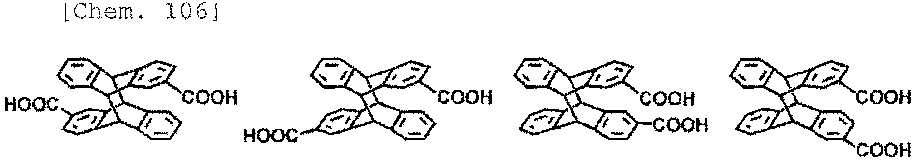

### (Synthesis Example 8)

In accordance with a report (Journal of the American Chemical Society (2018), 140, (34), 10820-10828), a 9-anthracenecarboxylic acid dimer (hereinafter also referred to as a 9-AC dimer) with the following structure was synthesized using a photochemical reaction.

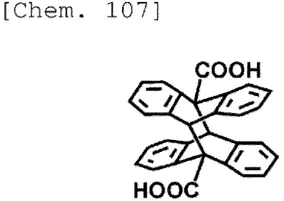

### (Synthesis Example 9)

In accordance with a report (Scientific Reports (2020), 10, (1), 20214), an anthracene compound with a glycidyl ether group (A-1) with the following structure was synthesized.

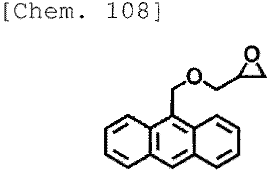

### (Synthesis Example 10)

6.0 g of the anthracene compound (A-1) produced in Synthesis Example 9 and 20 g of tetrahydrofuran in a recovery flask were dissolved using a stirrer. A UV spot light source ("LC8" manufactured by Hamamatsu Photonics K.K.) was used for UV irradiation at a light intensity of 30 mW/cm2 for 30 hours. The precipitate was then collected by suction filtration, was dried under reduced pressure at room temperature overnight, and was then dried by heating at 70°C under reduced pressure for 24 hours. Thus, 4.9 g of an anthracene dimer with the following structure (hereinafter also referred to as a 9-AG dimer) was produced.

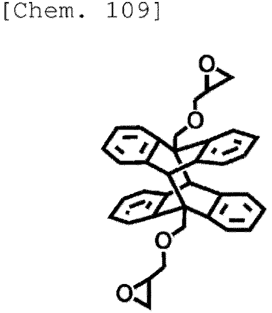

### (Examples 1 to 9 and Comparative Examples 1 to 3)

An epoxy resin, a substituted anthracene dimer compound, a curing agent, and a curing accelerator were uniformly mixed in a mixer ("Thinky Mixer ARV-200" manufactured by Thinky Corporation) in accordance with the formulation shown in Table 1 to prepare epoxy resin compositions EPC-1 to 9 and cEPC-1 to 3 of Examples 1 to 9 and Comparative Examples 1 to 3.

### <Tensile Shear Test>

The epoxy resin compositions EPC-1 to 9 and cEPC-1 to 3 produced in Examples 1 to 9 and Comparative Examples 1 to 3 were applied to one of two cold-rolled steel sheets ("SPCC-SD" manufactured by TP Giken, 1.0 mm x 25 mm x 100 mm), glass beads ("J-80" manufactured by Potters-Ballotini Co., Ltd.) were added as spacers, and the other SPCC-SD was bonded thereto (bonding area: 25 mm x 12.5 mm). This was cured by heating at a temperature shown in Table 1 to prepare a test specimen. The test specimen was subjected to a tensile shear test to evaluate adhesiveness. The test was performed in accordance with JIS K 6850 to compare the maximum stress at a measurement environment of 23°C.

Initial adhesive strength: The prepared test specimen was subjected to the shear test without any particular treatment. Table 1 shows the results.

Adhesive strength after heating: The test specimen was heated in a heat dryer under the predetermined conditions of "Additional heating" shown in Table 1 and was then subjected to the shear test. Table 1 shows the results.

### <Evaluation of Disassemblability>

The rate of decrease in strength was calculated by "(initial adhesive strength - adhesive strength after heating)/initial adhesive strength x 100". Table 1 shows the results.

### <Structural Periodicity>

A resin composition prepared in accordance with the formulation shown in Table 1 was placed between mirror-finished aluminum plates ("JIS H 4000 A1050P" manufactured by Engineering Test Service Co., Ltd.) using a silicon tube as a spacer and was cured by heating at a temperature shown in Table 1 to produce a resin cured product with a thickness of 0.8 mm. A cross section of the resin cured product was prepared with an ultramicrotome to observe structural periodicity. The observation was performed with a scanning electron microscope (SEM) so that the morphology contrast could be clearly determined. The presence or absence of a phase-separated structure in the cured product can be determined by the SEM observation. When the cured product had a phase-separated structure, and the structure formed a sea-island structure, the particle size of the island portion was measured. The average particle size was determined by arbitrarily selecting 50 island portions from island portions in a visual field of 200 µm x 260 um and measuring the particle size. Table 1 shows the results.

### <SEM>

Model used: JSM-7800F manufactured by JEOL Ltd.
Accelerating voltage: 5 kV

**[Table 1]**

| | | | Example | | | | | | | | | Comparative Example | | |
|---|---|---|---|---|---|---|---|---|---|---|---|---|---|---|
| | | | 1 | 2 | 3 | 4 | 5 | 6 | 7 | 8 | 9 | 1 | 2 | 3 |
| Epoxy resin composition | | | EPC-1 | EPC-2 | EPC-3 | EPC-4 | EPC-5 | EPC-6 | EPC-7 | EPC-8 | EPC-9 | cEPC-1 | cEPC-2 | cEPC-3 |
| Epoxy compound (A) (parts by mass) | | Ep-1 | 50 | 50 | 50 | 50 | 50 | 55 | | | | 55 | | 91 |
| | | Ep-2 | | | | | | | 55 | | | | | |
| | | Ep-3 | | | | | | | | 45 | 45 | | | |
| Epoxy compound (B) (parts by mass) | | E-850S | 33 | 33 | 33 | 33 | 33 | 36 | 36 | 45 | 45 | 36 | 91 | |
| Substituted anthracene dimer compound (C) (parts by mass) | | 2-AC dimer | 9 | 9 | 9 | 9 | | 9 | 9 | | | | 9 | 9 |
| | | 9-AC dimer | | | | | | | | 9 | 9 | | | |
| | | 9-AG dimer | | | | | 9 | | | | | | | |
| Curing agent (parts by mass) | | BPF | 8 | 8 | 8 | 8 | 8 | | | | | 9 | | |
| | | DICY | 4.1 | 4.1 | 4.1 | 4.1 | 4.1 | 4.5 | 4.6 | | | 4.5 | 10.2 | 0.9 |
| | | mXDA | | | | | | | | 8.9 | 8.9 | | | |
| Curing accelerator (parts by mass) | | DCMU | 0.85 | 0.85 | 0.85 | 0.85 | 0.85 | 0.85 | 0.85 | | | 0.85 | 0.85 | 0.85 |
| Curing conditions | Temperature (°C) | | 150 | 150 | 150 | 150 | 150 | 150 | 150 | 100 | 150 | 150 | 150 | - |
| | Time | | 30 min | 3h | 3h | 3h | 3h | 3h | 3h | 3h | 3h | 30 min | 3h | - |
| Additional heating | Temperature (°C) | | 200 | 200 | 170 | 200 | 200 | 200 | 200 | 200 | 200 | 30 min | 3h | - |
| | Time | | 3h | 3h | 3h | 30 min | 3h | 3h | 3h | 3h | 3h | 30 min | 3h | - |
| Tensile shear test | Maximum stress (MPa) | Initial adhesive strength | 22.8 | 23.3 | 23.3 | 23.3 | 28.8 | 19.5 | 22.4 | 6 | 9.05 | 21.3 | 12.1 | - |
| | | Adhesive strength after heating | 3.9 | 4.9 | 5.74 | 4.07 | 23.4 | 12.3 | 15.7 | 3.82 | 4.08 | 21.8 | 12.2 | - |
| | | Strength decrease rate (%) | 82.9 | 79.0 | 75.4 | 82.5 | 18.8 | 36.9 | 29.9 | 36.3 | 54.9 | -2.3 | -0.8 | - |
| Structural periodicity | | Morphology | Sea-island | Sea-island | Sea-island | Sea-island | Sea-island | Sea-island | Sea-island | Sea-island | Sea-island | Sea-island | None | - |
| | | Particle size (µm) | 1.1 | 1.1 | 1.1 | 1.1 | 1.0 | 1.0 | 1.0 | 0.4 | 0.5 | 1.1 | - | - |

The components shown in the table are as follows:
Epoxy resin B: epoxy resin EPICLON 850S (bisphenol A liquid epoxy resin, epoxy equivalent: 188 g/eq) manufactured by DIC Corporation
Curing agent: BPF-HG (bisphenol F) manufactured by Gun Ei Chemical Industry Co., Ltd.
Curing agent: dicyandiamide DICY7 manufactured by Mitsubishi Chemical Corporation
Curing agent: meta-xylylene diamine (mXDA) manufactured by Kanto Chemical Co., Inc.
Curing accelerator: B-605-IM (3-(3,4-dichlorophenyl)-1,1-dimethylurea) manufactured by DIC Corporation
In the table, "Strength decrease rate: -2.3%, -0.8%" in Comparative Examples 1 and 2 means "Strength increase rate: 2.3%, 0.8%", respectively.

### (Examples 10 to 15 and Comparative Example 4)

### <Tensile Test>

Each of the epoxy resin compositions EPC-1, 2, and 5 to 8, and cEPC-2 produced in Examples 1, 2, and 5 to 8, and Comparative Example 2 was placed between mirror-finished aluminum plates ("JIS H 4000 A1050P" manufactured by Engineering Test Service Co., Ltd.) using a silicon tube as a spacer and was cured by heating at a temperature shown in Table 2 to produce a resin cured product with a thickness of 0.8 mm. The cured product was punched into a dumbbell shape (JIS K 7161-2-1BA) with a punching blade and was used as a test specimen. The test specimen was subjected to a tensile test using a tensile tester ("Autograph AG-IS" manufactured by Shimadzu Corporation) in accordance with JIS K 7162-2 to evaluate the elongation at break in a measurement environment of 23°C (test speed: 2 mm/min). Table 2 shows the results.

**[Table 2]**

| | | Example | | | | | | Comparative Example |
|---|---|---|---|---|---|---|---|---|
| | | 10 | 11 | 12 | 13 | 14 | 15 | 4 |
| Epoxy resin composition | | EPC-1 | EPC-2 | E PC-5 | EPC-6 | EPC-7 | E PC-8 | cEPC-2 |
| Curing temperature (°C) | | 150 | 150 | 150 | 150 | 150 | 100 | 150 |
| Curing time | | 30 min | 3 h | 3 h | 3 h | 3 h | 3 h | 3h |
| Tensile test | Elongation at break (%) | 36.6 | 52.7 | 13.3 | 48.9 | 21.7 | 14.5 | <1 |

### (Discussion)

A cured product of an epoxy composition according to the present invention has a phase-separated structure in which a low-modulus phase (high flexibility) and a high-modulus phase (adhesive strength) independently have both performances. This phase separation can be considered to be caused by the "difference in cross-linking rate" between the matrix resins constituting the low-modulus phase and the high-modulus phase and the "difference in compatibility" between cured products after cross-linking.

It can also be considered that a resin containing a long-chain alkyl and a polyether in the main chain as the low-modulus phase can be used to impart high flexibility.

Due to an anthracene dimer with a curable group capable of reacting with an epoxy group, an anthracene dimer skeleton is incorporated into a network after curing. It can be considered that further heating this cured product provides the anthracene dimer skeleton with a thermal dissociation function, cuts the network, and provides high disassemblability.

As shown in Table 1, in Comparative Example 2, even when an anthracene dimer skeleton was introduced in the same manner as in Example 1, the use of an epoxy resin different from that in Example 1 did not realize the dissociation function as in the present invention. It is presumed that the use of specific two epoxy resins of the present invention dispersed an anthracene dimer skeleton in a cured product of an epoxy resin composition in a distribution advantageous for the dissociation function.

In Comparative Example 1, because an anthracene dimer skeleton with a dissociation function was not contained, high disassemblability was not realized. Comparative Example 3 could not be evaluated because the resin composition could not be blended due to its high viscosity.

When a cured product of an epoxy resin composition according to an embodiment of the present invention had a sea-island structure, it is presumed that an anthracene dimer skeleton was dispersed in the sea portion and the island portion in a distribution advantageous for the dissociation function.

As shown in Table 2, in Examples 10 to 15 in which the epoxy resin compositions EPC-1, 2, and 5 to 8 produced in Examples 1, 2, and 5 to 8 were used, even when the anthracene dimer skeleton was introduced, the cured product had a sea-island structure and therefore had high flexibility. However, in Comparative Example 4 in which the epoxy resin composition cEPC-2 produced in Comparative Example 2 was used, the cured product did not have a sea-island structure and therefore did not have high flexibility.

## Claims

1. An epoxy resin composition comprising:
an epoxy resin (A) with an epoxy equivalent in the range of 500 to 10,000 g/eq;
an epoxy resin (B) with an epoxy equivalent in the range of 100 to 300 g/eq; and
a compound (C) with an anthracene dimer skeleton,
wherein the epoxy resin (A) is represented by the following general formula (1), and
the compound (C) has two or more groups containing an epoxy group or two or more groups containing a curable group. 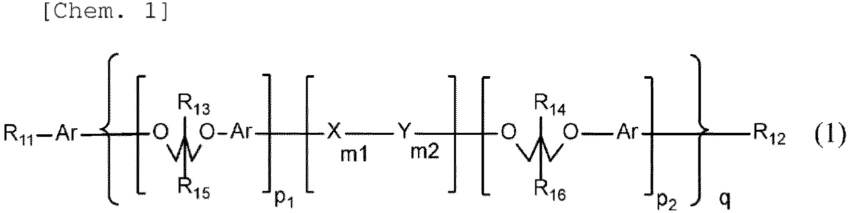 [In the formula (1), Ar each independently denotes a structure having an unsubstituted aromatic ring or having an aromatic ring with a substituent, and
X denotes a structural unit represented by the following general formula (2), and Y denotes a structural unit represented by the following general formula (3): 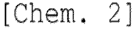 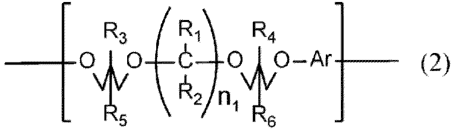 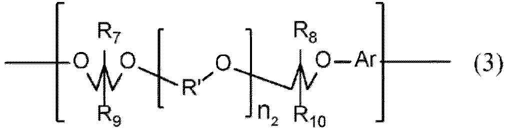 [In the formulae (2) and (3), Ar is the same as defined above,
R₁ and R₂ each independently denote a hydrogen atom, a methyl group, or an ethyl group,
R' denotes a divalent hydrocarbon group with 2 to 12 carbon atoms,
R₃, R₄, R₇, and R₈ each independently denote a hydroxy group, a glycidyl ether group, or a 2-methyl glycidyl ether group,
R₅, R₆, R₉, and R₁₀ each independently denote a hydrogen atom or a methyl group,
n₁ denotes an integer in the range of 4 to 16, and
n₂ denotes an average value of repeating unit in the range of 2 to 30.]
R₁₁ and R₁₂ each independently denote a glycidyl ether group or a 2-methyl glycidyl ether group,
R₁₃ and R₁₄ each independently denote a hydroxy group, a glycidyl ether group, or a 2-methyl glycidyl ether group,
R₁₅ and R₁₆ denote a hydrogen atom or a methyl group,
m₁, m₂, p₁, p₂, and q denote an average value of repetition,
m₁ and m₂ each independently range from 0 to 25, and m₁ + m₂ ≥ 1,
p₁ and p₂ each independently range from 0 to 5, and
q ranges from 0.5 to 5, provided that a bond between X represented by the general formula (2) and Y represented by the general formula (3) may be random or block, and a total number of a structural unit X per molecule and a total number of a structural unit Y per molecule are m₁ and m₂, respectively.]

2. The epoxy resin composition according to Claim 1, wherein Ar in the general formulae (1) to (3) is each independently represented by any one of the following structural formulae (4). 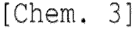 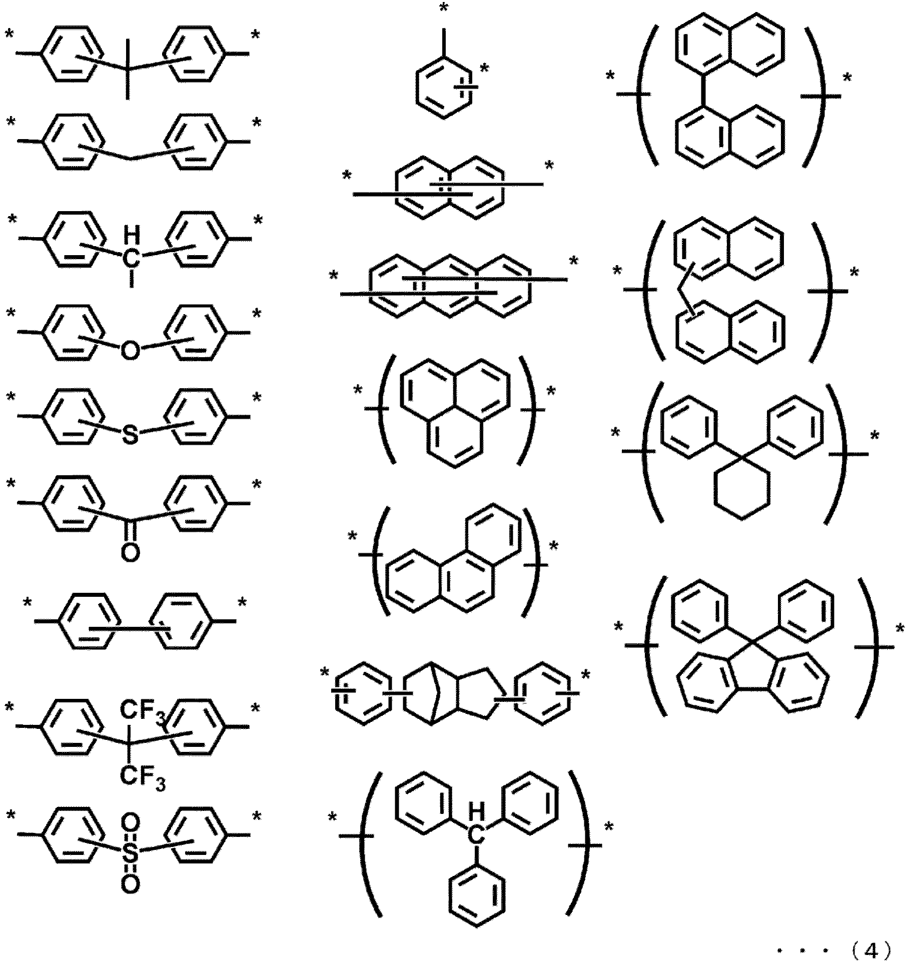 [An aromatic ring in the formulae (4) may be substituted or unsubstituted, and * denotes a bonding point.]

3. The epoxy resin composition according to Claim 1 or 2, wherein n₁ in the general formula (2) ranges from 6 to 12, R₃ and R₄ denote a hydroxy group, and R₅ and R₆ denote a hydrogen atom.

4. The epoxy resin composition according to Claim 1 or 2, wherein in the general formula (3) R' denotes a divalent hydrocarbon group with 2 to 6 carbon atoms, R₇ and R₈ denote a hydroxy group, and R₉ and R₁₀ denote a hydroxy group.

5. The epoxy resin composition according to Claim 1 or 2, wherein the compound (C) with the anthracene dimer skeleton is a compound (C-i1) represented by the following general formula (I-1). 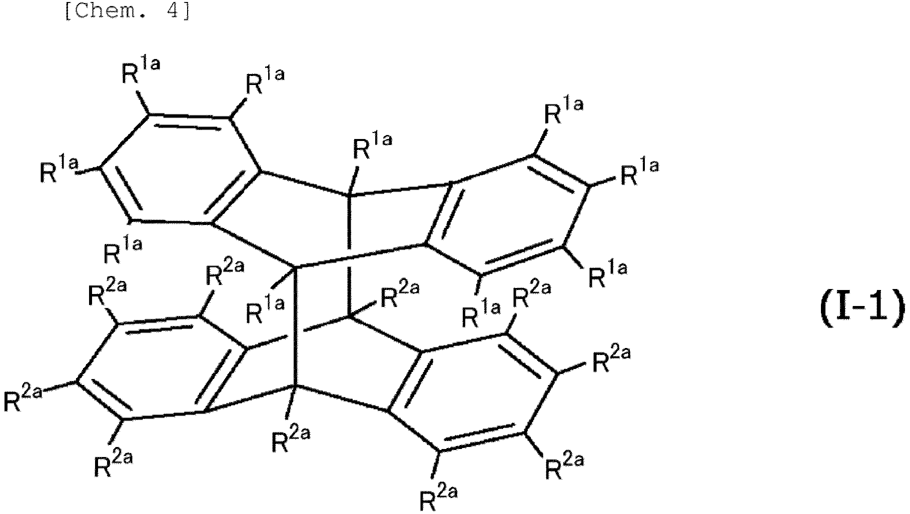 [In general formula (I-1),
a plurality of R^{1a}s each independently denote a hydrogen atom or a monovalent substituent, provided that at least one R^{1a} denotes a group containing an epoxy group, and
a plurality of R^{2a}s each independently denote a hydrogen atom or a monovalent substituent, provided that at least one R^{2a} denotes a group containing an epoxy group.]

6. The epoxy resin composition according to Claim 1 or 2, wherein the compound (C) with the anthracene dimer skeleton is a compound (C-i2) represented by the following general formula (I-2). 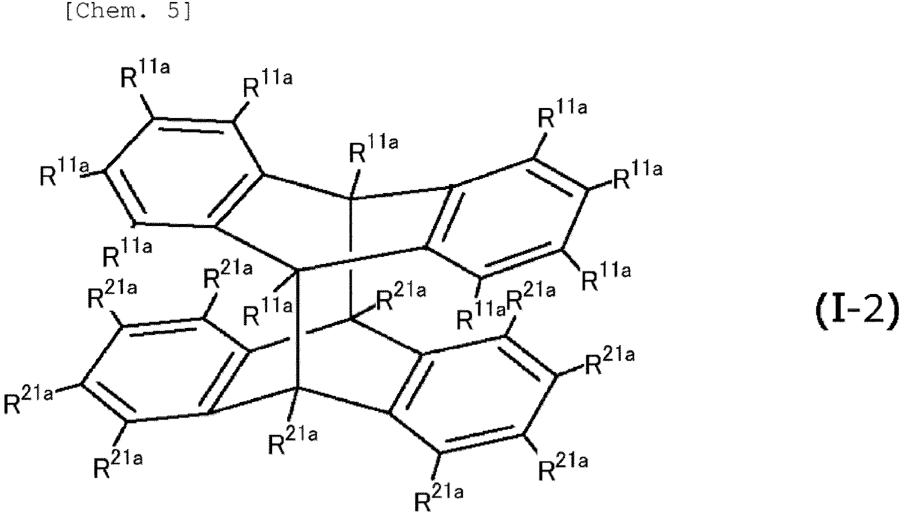 [In the general formula (I-2),
a plurality of R^{11a}s each independently denote a hydrogen atom or a monovalent substituent, provided that at least one R^{11a} denotes a group containing a curable group, and
a plurality of R^{21a}s each independently denote a hydrogen atom or a monovalent substituent, provided that at least one R^{21a} denotes a group containing a curable group.]

7. The epoxy resin composition according to Claim 6,
wherein in the compound (C-i2) represented by the general formula (I-2) at least one R^{11a} and at least one R^{21a} are selected from the group consisting of a group containing an amino group, a group containing a hydroxy group, and a group containing a carboxy group.

8. The epoxy resin composition according to Claim 6,
wherein in the compound (C-i2) represented by the general formula (I-2) at least one R^{11a} and at least one R^{21a} denote a group containing a carboxy group.

9. The epoxy resin composition according to Claim 1 or 2, further comprising a curing agent (D).

10. The epoxy resin composition according to Claim 1 or 2, which is an adhesive agent.

11. A cured product of the epoxy resin composition according to Claim 1 or 2.

12. The cured product of the epoxy resin composition according to Claim 11, wherein
the cured product of the epoxy resin composition has a sea-island structure composed of a sea portion and an island portion, and
the sea portion has an average particle size in the range of 10 nm to 100 µm.

13. A laminate produced by stacking a substrate and the cured product according to Claim 11.

14. A laminate produced by stacking a first substrate, a layer composed of the cured product according to Claim 11, and a second substrate in this order.

15. The laminate according to Claim 14, wherein the first substrate is a substrate composed of a metal or a metal oxide, and the second substrate is a substrate composed of a plastic.
